# EUROPEAN PATENT APPLICATION

(11) **EP 1 398 688 A2**
(43) Date of publication of application: **17.03.2004**
(21) Application number: 03255723.3
(22) Date of filing: 12.09.2003
(51) Int. Cl.: G06F 3/12

(54) **Information processing apparatus, image formation apparatus, drawing processing method**

(30) Priority: 13.09.2002 JP 2002267967
(71) Applicant: Ricoh Company, Tokyo 143-8555 (JP)
(72) Inventor: Ishihara, Hiroshi, Ohta-ku Tokyo 143-8555 (JP)
(74) Representative: Leeming, John Gerard

(57) **Abstract**

It is determined whether drawing process corresponding to a graphical drawing instruction, out of a plurality of graphical drawing instructions, can be omitted based on a drawing attribute of a pattern corresponding to the graphical drawing instruction. A selection unit (42) makes the graphical drawing instruction invalid if the drawing omission determination unit (41) determines that the drawing process can be omitted, and makes other graphical drawing instructions valid. An output unit (52) outputs to an information processing apparatus the other graphical drawing instructions to get an image corresponding to the other graphical drawing instructions printed.

## Description

The present invention relates to technology for processing graphical drawing instructions.

When an image is formed using page printers, contents of the image is specified with graphical drawing instructions, and a portion of the image corresponding to each graphical drawing Instruction is successively drawn on a page memory to prepare a print image for one page on the page memory. This print image is then printed on a recording medium.

In drawing an image, data is read from an address of a drawing destination of the page memory, the data is processed in accordance with the graphical drawing instructions, and the processed data is written into the page memory. Similar processing is executed for all the addresses necessary for the drawing.

It is common now a days to draw complex images with gradations using logical sum (hereinafter, "OR") and logical product (hereinafter, "AND"). Moreover, the printing is becoming complex day-by-day. For example, it is common to print elements like headers, footers, stamps, tint-blocks, watermarks etc. When printing such elements, if the replacement operation (hereinafter, "SET") is performed, the background of the image is erased. Therefore, generally the images are drawn using OR operation,

Particularly, if the element occupies a large area, like a tint-block or a large pattern, an address range of the drawing becomes wide, and it becomes necessary to repeat the processing of read, modify, and write many times. This takes time and reduces the printing speed.

Japanese Patent Application Laid-open Publication Nos. H5-266177, H6-150012, H11-7364, and Japanese Patent Publication No. 2956390, disclose approaches to solve these problems.

Japanese Patent Application Laid-open Publication No. H5-266477 discloses a drawing apparatus that omits the write processing when data obtained in the modify processing is the same as that read in the read processing. In other words, after modifying the read data, the data read next time is compared with the data modified, and if this newly read data is the same as the modified data, since the modified data has already been written, the write operation for the newly read data is skipped. Thus, the amount of time saved is just the difference between the time gained because of skipping of the write processing and the time spent in the comparison of read data and modified data. Consequently, unless the write operation takes too much time, there not much time reduction.

Japanese Patent Application Laid-open Publication No. H6-150012 and Japanese Patent Publication No. 2956390 disclose drawing processors that read pattern data, source data, and destination data from memories respectively. Each drawing processor carries out an assigned modification to'these data, and writes new destination data as a result of the modification as follows. The drawing processor omits a reading of data that is not reflected in a modification result judging from the contents of the assigned modification, out of the pattern data, the source data, and the destination data. However, although unnecessary data is not read, the write processing is required to be executed without exception, so that there is not much time reduction.

Japanese Patent Application Laid-open Publication No. H11-7364 discloses an information processing apparatus in which it is determined whether a drawing region corresponding to a drawing instruction is superimposed with a drawing region corresponding to other drawing instruction. When the drawing regions are not superimposed, the drawing attribute of the other drawing instruction is changed. It is checked for all other drawing instructions whether there is superimposition. This checking requires time that increases in proportion to substantially a square of the number of drawing instructions. Currently there are applications that contain several thousand or several tens of thousand of drawing instructions, so that the checking requires great time. Further, it becomes necessary to provide memories that store positions of the drawing areas so that there is cost increase.

It is an object of the present invention to solve at least the problems in the conventional technology,

An information processing apparatus according to one aspect of the present invention includes a drawing omission determination unit that determines whether drawing process corresponding to a graphical drawing instruction, out of a plurality of graphical drawing instructions, can be omitted-based on a drawing attribute of a pattern corresponding to the graphical drawing instruction; a selection unit that makes the graphical drawing instruction invalid if the drawing omission determination unit determines that the drawing process can be omitted, and makes other graphical drawing instructions valid; and an output unit that outputs to an information processing apparatus the other graphical drawing instructions to get an image corresponding to the other graphical drawing instructions printed.

An image formation apparatus according to one another aspect of the present invention includes a page memory; a drawing omission determination unit that determines whether drawing process corresponding to a graphical drawing instruction, out of a plurality of graphical drawing instructions, can be omitted based on a drawing attribute of a pattern corresponding to the graphical drawing instruction; a selection unit that makes the graphical drawing instruction invalid if the drawing omission determination unit determines that the drawing process can be omitted, and makes other graphical drawing instructions valid; a drawing unit that performs the drawing process to draws an image onto the page memory based' on the other graphical drawing instructions; and an image formation unit that forms an image onto a recording medium paper based on the image on the page memory.

A drawing processing method according to still another aspect of the present invention includes determining whether drawing process corresponding to a plurality of graphical drawing instructions can be omitted based on a drawing attribute of a pattern corresponding to the graphical drawing instruction; and making the graphical drawing instruction invalid if it is determined at the determining that the drawing process can be omitted, and making other graphical drawing instructions valid.

A computer program according to still another aspect of the present invention realized the method according to the above mentioned aspect on a computer.

These and other objects, features and advantages of the present invention are specifically set forth in or will become apparent from the following detailed descriptions of the invention when read in conjunction with the accompanying drawings.
Fig. 1 is a block diagram of a functional configuration of a controller of a printer having a drawing processing device according to a first embodiment of the present invention;
Fig. 2 is a block diagram of a hardware configuration of the printer;
Figs. 3A to 3F are illustrations of an omission of a drawing processing in the printer;
Fig. 4 is a flowchart of the processing performed by the printer according to the first embodiment;
Fig. 5 is a flowchart of the drawing omission determination processing;
Fig. 6 is a block diagram of a functional configuration of a personal computer having a drawing processing device according to a second embodiment of the present invention;
Fig. 7 is a block diagram of a hardware configuration of the personal computer;
Fig. 8 is a flowchart of the processing performed by the personal computer according to the second embodiment;
Fig. 9 illustrates a modification of the first and second embodiments;
Fig. 10 illustrates another modification of the first and second embodiments;
Fig. 11 is a block diagram of a functional configuration of a controller of a printer having a drawing processing device according to a third embodiment of the present invention;
Fig. 12 is a flowchart of the processing performed by the printer according to the third embodiment;
Fig. 13 is a flowchart of a second drawing omission determination processing shown in Fig. 12;
Fig. 14 is an illustration of an example of a drawing processing instruction that explains about the second drawing omission determination processing of the printer;
Fig. 15 is a block diagram of a functional configuration of a personal computer having a drawing processing device according to a fourth embodiment of the present invention;
Fig. 16 is a flowchart of the processing performed by the personal computer according to the fourth embodiment;
Fig. 17 is an illustration of how one page is divided into a plurality of determination regions according to a plurality of bands;
Fig. 18 is a graphical drawing;
Fig. 19 is an illustration of how one page can be divided into a plurality of determination regions .different from those shown in Fig. 17;
Fig. 20 is an illustration of an example of drawing a pattern for each plane;
Fig. 21 is an illustration of an example of drawing a pattern in a state that a page is divided into determination regions for each color plane;
Fig. 22 is a block diagram of a functional configuration of a controller of a printer having a drawing processing device according to the fifth embodiment of the present invention;
Fig. 23 is an explanatory diagram of the contents of an intermediate data memory and the contents of a drawing data memory; and
Fig. 24 is a block diagram of a functional configuration of a personal computer having a drawing processing device according to the sixth embodiment of the present invention.

Exemplary embodiments of the present invention will be explained below while referring to the accompanying drawings.

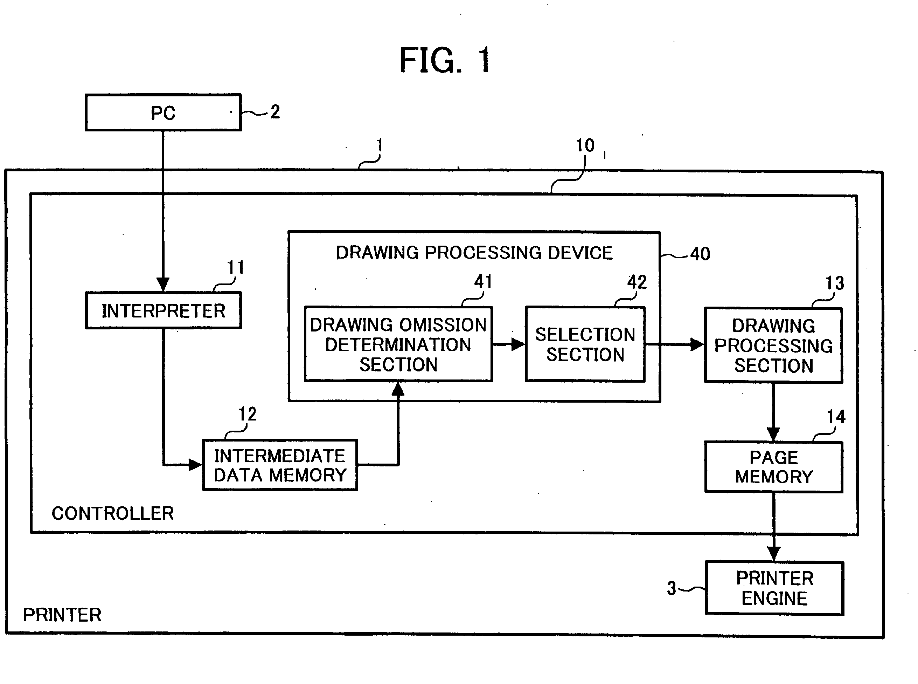

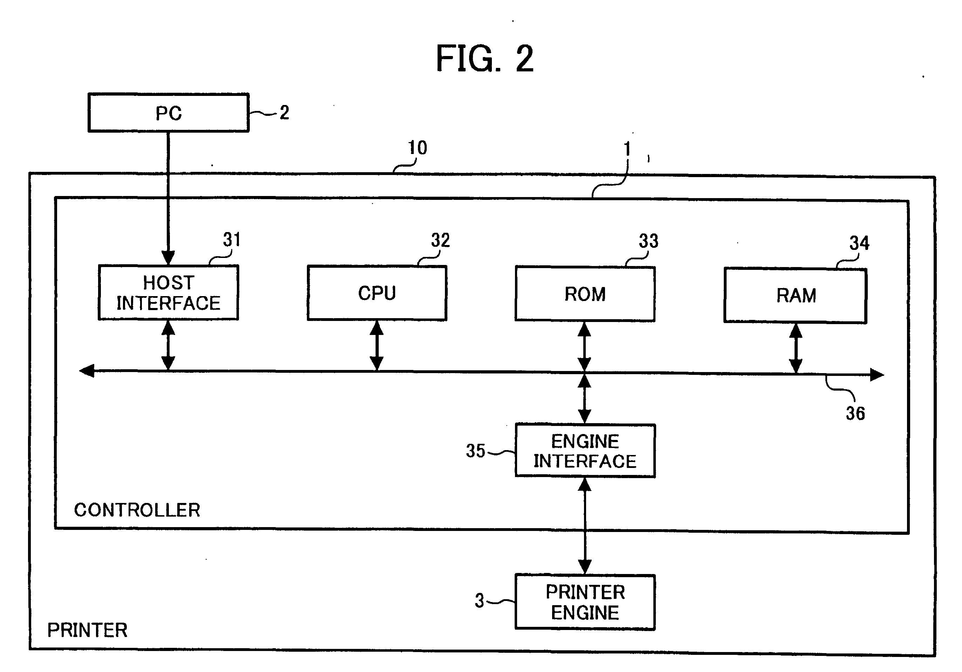

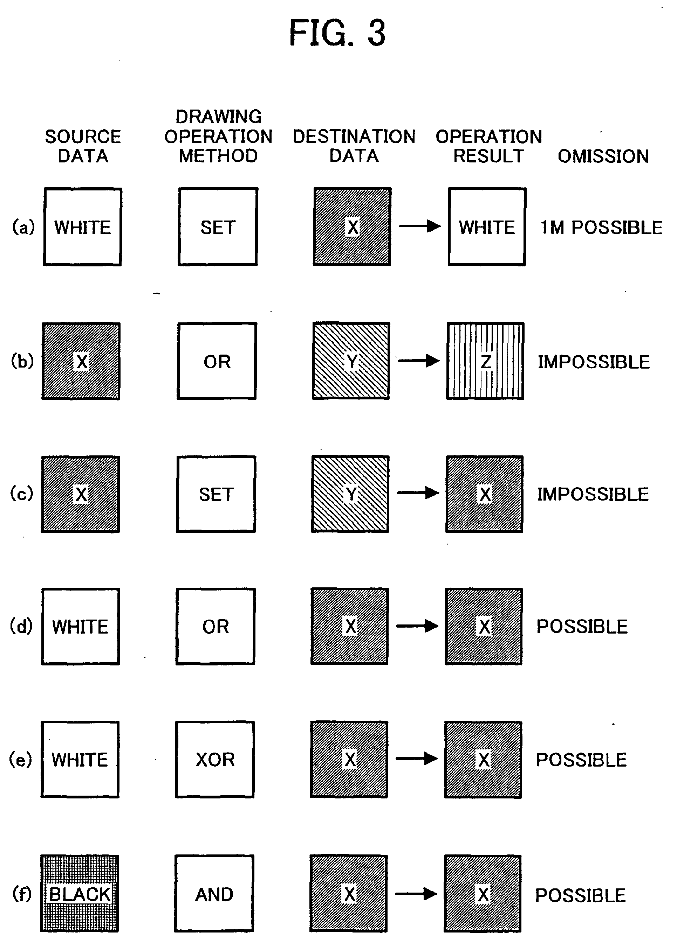

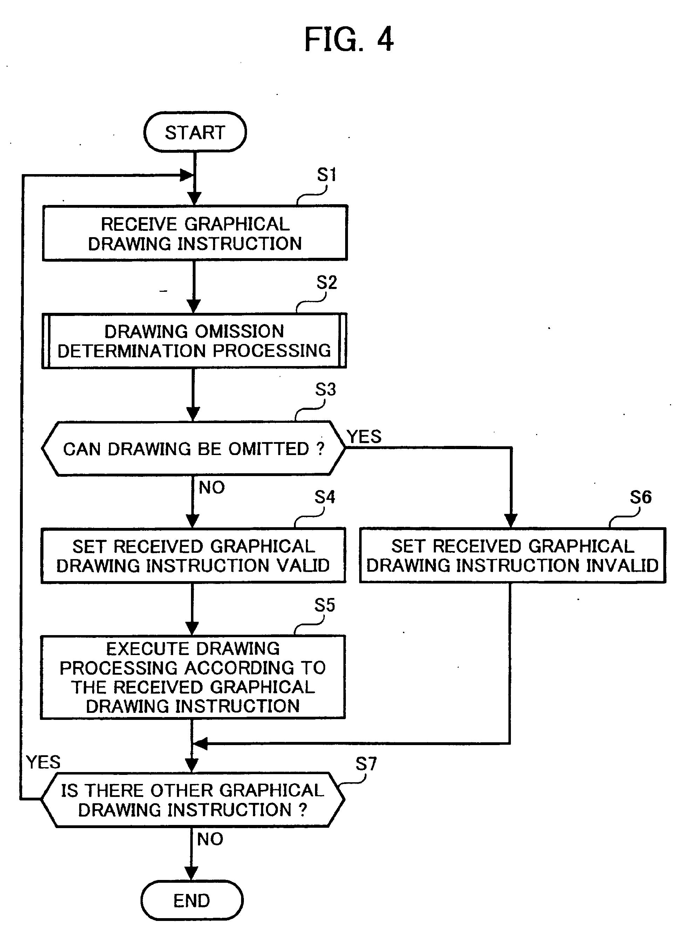

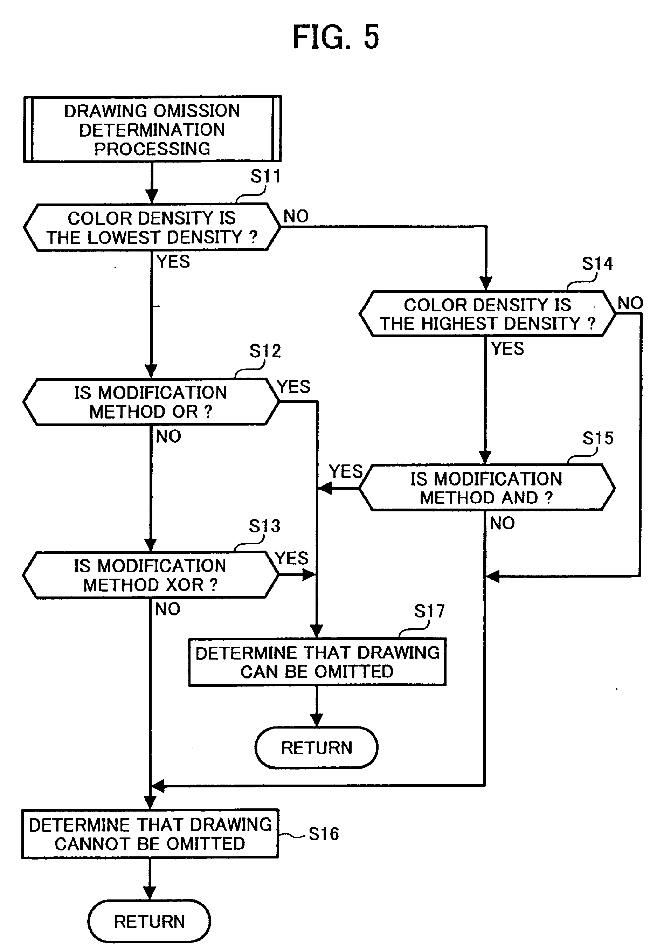

Fig. 1 is a block diagram of a functional configuration of a printer including a controller that in turn includes a drawing processing device according to a first embodiment of the present invention. Fig. 2 is a block diagram of a hardware configuration of the printer. Figs. 3A to 3F are illustrations of an omission of a drawing processing in the printer. Fig. 4 is a flowchart of the processing performed by the printer with an emphasis on the processing performed by the drawing processing device. Fig. 5 is a detailed flowchart of the drawing omission determination processing.

The printer, which is example of an image formation apparatus, is connected to a personal computer (hereinafter, "PC") 2, which is an external host device. This printer forms an image onto a paper according to drawing instruction received from the PC 2. This printer has a printer engine 3 and an engine interface 35 (see Fig. 2).

The printer engine 3 forms an image onto paper according to an optional method such as an electro photographic method or an inkjet method. This printer engine 3 forms an image based on image data and a control signal transferred from a controller 10.

The controller 10 controls a total operation of the printer 1, and controls transmission and reception of Information with the PC 2. The controller 10 comprises a host interface 31, a central processing unit (hereinafter, "CPU") 32, a read only memory (hereinafter, "ROM") 33, a random access memory (hereinafter, "RAM") 34, and an engine interface 35, which are connected to each other via a system bus 36.

The host interface 31 connects between the printer 1 and the PC 2. This connection may be via a network such as a local area network (LAN), or a local connection according to a universal serial bus (hereinafter, "USB") or the like.

The CPU 32 executes various kinds of control programs and application programs that are stored in the ROM 33, thereby to control transmission and reception of information and operation of various sections, and control a drawing omission determination of graphical drawing instructions and a drawing processing following graphical drawing instructions.

The ROM 33 stores various kinds of control programs, application programs, and necessary parameters. When the ROM 33 is changed to a rewritable memory, a version up of a program can be achieved easily,

The RAM 34 is used as a work memory of the CPU 32, and functions as an intermediate data memory 12 and a page memory 14.

The engine interface 35 is used to connect between the controller 10 and the printer engine 3.

The controller 10 includes an interpreter 11, the intermediate data memory 12, a drawing processing device 40, a drawing processing section 13, and the page memory 14. The RAM 34 achieves the functions of the intermediate data memory 12 and the page memory 14. The CPU 32 achieves the functions of other sections by executing various kinds of programs that are stored in the ROM 33. Particularly, the CPU 32 achieves the function of the drawing processing device 40 according to the embodiment of the present invention.

The interpreter 11 converts the drawing instruction described in a page description language (hereinafter, "PDL") received from the PC 2 into graphical drawing instructions according to intermediate data in a form suitable for the printer 1 to draw an image into the page memory 14. The intermediate data memory 12 stores the graphical drawing instructions obtained by the conversion. The drawing processing device 40 sequentially processes the stored graphical drawing instructions.

The intermediate data is used to assign left upper coordinates and right lower coordinates to draw a rectangular image, for example, and assign left upper coordinates, a width, and a height. The PDL and the intermediate data include basic graphical drawing instructions to assign characters, patterns, and images to be drawn, and drawing attribute instructions to assign drawing attributes such as colors and clipping regions concerning the drawing, and a modification method.

The drawing processing device 40 includes a drawing omission determination section 41 and a selection section 42. The drawing omission determination section 41 has a function of determining about whether a drawing concerning an input graphical drawing instruction can be omitted. The selection section 42 has a function of setting invalid the input graphical drawing instruction of which drawing the drawing omission determination section 41 determines it to be able to omit, and setting drawing according to other graphical drawing instructions valid.

The drawing processing device 40 processes the graphical drawing instructions included in the intermediate data, thereby to set invalid the drawing according to a graphical drawing instruction that can be omitted. The drawing processing section 13 as a drawing unit draws images onto the page memory 14 based on the graphical drawing instructions that are set valid.

After the drawing of images that are necessary for one page is finished, the image data as the contents of the page memory 14 is transmitted to the printer.engine 3, The printer engine 3 forms images based on the image data, thereby to form the images based on the drawing instructions received from the PC 2.

The drawing processing device 40 determines whether the drawing process can be omitted according to the drawing attributes of a graph concerning a graphical drawing instruction. This drawing omission determination will be explained below. In the following explanation, a data bit off is expressed as "0", and a data bit on is expressed as "1". Unless otherwise specified, color density is assigned using gradients of 0 to 255 of eight bits for one pixel. Zero (0) represents a lowest color density (i.e., white), and 255 represents a highest color density (i.e., black when an image is a monochromatic image).

The printer 1 carries out a drawing processing following graphical drawing instructions as follows. The printer 1 reads current data from an address corresponding to a drawing position in the page memory 14 as destination data (i.e., read processing), carries out an assigned modification of source data as color data concerning the drawing (i.e., modification), and returns obtained data as new destination data to the original position in the page memory 14 (i.e., write processing). The printer 1 carries out this series of processing for each pixel (or dot) of a pattern to be drawn.

For example, as in (a) in Fig. 3, when the source data is "0", which means white, and the modification method is the SET, the modification result becomes "0" regardless of the destination data. Accordingly, data that represents white is written back to the corresponding address. As in (b) in Fig. 3, when source data is "X" and the modification method is OR, data "Z" is written back to the corresponding address regardless of the destination data, which is "Y". As in (c) in Fig. 3, when source data is "X" and the modification method is the SET, data "X" is written back to the corresponding address regardless of the destination data, which is "Y". Thus, usually, the data at the address corresponding to the drawing position changes as a result of the modification.

However, as in (d) in Fig. 3, when source data is "0" and the modification method is OR, the processing result "X" is the same as the destination data. Therefore, in this particular case the drawing processing can be omitted.

Similarly, as in (e) in Fig. 3, when source data is "0" and the modification method is exclusive logical sum (hereinafter, "XOR"), the drawing processing can be omitted because the processing result "X" is the same as the destination data. As in (f) in Fig. 3F, when source data is "255", which means black, and the modification method is AND, the drawing processing can be omitted because the processing result "X" is the same as the destination data.

Thus, in the cases of (d), (e), and (f), the drawing processing can be omitted by referring to only colors and modification methods among the drawing attributes of a pattern concerning the graphical drawing instructions. When a determination about the omission can be made based on only the drawing attributes, not only the write processing but also the read processing and the modification need not be carried out when the drawing can be omitted. Accordingly, there is a large effect of a reduction in the processing time. Consequently, when a graphical drawing attribute concerning a graphical drawing instruction does not change the contents of the page memory 14 before and after the drawing regardless of the contents of the page memory 14 even when the drawing concerning this graphical drawing instruction is carried out, the drawing omission determination section 41 of the ' drawing processing device 40 can determine that the drawing concerning this graphical drawing instruction can be omitted.

When a pattern concerning a graphical drawing instruction is a graphic pattern such as a rectangle or an optional polygon or when one color is used like a character, a determination does not need to be taken for each pixel. By making only one determination for one graphical drawing instruction, a determination about omission can be made for all the drawings concerning this instruction.

Even in (a), (b, and (c), when the destination and the source are in the same color, the status of the page memory 14 does not change before and after the drawing processing so that the drawing process can be omitted. However, to know whether the destination and the source are same, the page memory 14 needs to be accessed, which takes time for the processing. When this method is applied to an apparatus in which image data has one to two bits for one pixel, the color density is expressed in artificial gradation using a constant area according to a dithering or an error diffusion method, Therefore, the density needs to be inversely converted into a gradation, which is not realistic. Accordingly, the drawing processing device 40 cannot omit the drawing unless the omission cannot be determined without referring to the page memory 14.

The image formation processing of the printer 1 will be explained with an emphasis on the processing of the drawing omission determination.

In forming an image, the CPU 32 of the printer 1 executes a program stored in the ROM 33, thereby to start the processing shown in a flowchart of Fig. 4.

First, at step S1, the CPU 32 receives a graphical drawing instruction to be executed next from among graphical drawing instructions that are obtained by the conversion by the interpreter 11 and that are stored in the intermediate data memory 12. The CPU 32 receives the graphical drawing instruction in a pattern un'it. At step S2, the CPU 32 executes a drawing omission determination processing shown in a flowchart of Fig. 5, and determines whether the drawing concerning the graphical drawing instruction can be omitted.

In the drawing omission determination processing, first at step S11, the CPU 32 refers to the drawing attributes of the pattern concerning the graphical drawing instruction, and determines whether the color density is the lowest density. When the pattern concerning the graphical drawing instruction includes a plurality of colors, none of the colors is handled. A processing that s valid for the inclusion of a plurality of colors will be explained later as a modification.

When the color density is the lowest density as a result of the determination made at step S11, the system control is passed to step S12, and the CPU 32 determines whether the modification method is OR,

When the modification method is OR as a result of the determination made at step S12, the drawing attribute does not change the contents of the page memory 14 before and after the drawing, regardless of the contents of the page memory 14. Therefore, the CPU 32 determines at step S17 that the drawing concerning the graphical drawing instruction can be omitted, and returns to the start of the processing.

When the modification method is not OR at step S12, the system control is passed to step S13. and the CPU 32 determines whether the modification method is XOR. When the modification method is XOR, the system control is passed to step S17, and the CPU 32 determines at step S17 that the drawing concerning the graphical drawing instruction can be omitted, and returns to the start of the processing. However, when the modification method is not XOR as a result of the determination made at step S13, the drawing attribute can change the contents of the page memory 14 before and after the drawing regardless of the contents of the page memory 14. Therefore, the CPU 32 determines at step S16 that the drawing concerning the graphical drawing instruction cannot be omitted, and returns to the start of the processing.

On the other hand, when the color density is not the lowest density as a result of the determination made at step S11, the system control is passed to step S14, and the CPU 32 determines whether the color density is the highest density. When the color density is the highest density as a result of the determination made at step S14, the system control is passed to step S15, and the CPU 32 determines whether the modification method is AND. When the modification method is AND, the CPU 32 determines at step S17 that the drawing concerning the graphical drawing instruction can be omitted, and returns to the start of the processing.

When the modification method is not AND at step S15 and also when the color density is not the highest density as a result of the determination made at step S14, the system control is passed to step S16. The CPU 32 determines at step S16 that the drawing concerning the graphical drawing instruction cannot be omitted, and returns to the start of the processing,

Based on the above drawing omission determination processing, the CPU 32 determines that the drawing can be omitted in any one of the following three cases:
(1) when the color density of the drawing is the lowest density, and also when the modification method is OR;
(2) when the color density of the drawing is the lowest density, and also when the modification method is XOR; and
(3) when the color density of the drawing is the highest density, and also when the modification method is AND.
In other cases, the CPU 32 determines that the drawing cannot be omitted. The information that is used to make the determination is only the information of a graphical drawing attribute concerning the graphical drawing instruction.

In the processing shown in Fig. 5, the CPU 32 functions as the drawing omission determinatjon section 41.

After ending the drawing omission determination processing, the system control is passed to step S3 shown in Fig. 4, and the CPU 32 determines whether the drawing can be omitted as a result of the determination made in the drawing omission determination processing. When the drawing cannot be omitted, the CPU 32 sets the received graphical drawing instruction valid at step S4, and executes at step S5 the drawing processing to the page memory 14 following the drawing instruction. At step S4, the CPU 32 doe not need to add any data to the graphical drawing instruction, but sets valid the graphical drawing instruction by simply outputting the graphical drawing instruction to the drawing processing section 13. At step S5, the CPU 32 functions as the drawing processing section 13.

After the processing at step S5, the system control is passed to step S7, and the CPU 32 determines whether there is a graphical drawing instruction to be processed. When there is a graphical drawing instruction to be processed, the system control is passed to step S1, and the CPU 32 repeats the processing. When there is no graphical drawing instruction to be processed, the CPU 32 ends the processing.

When the drawing can be omitted at step S3, the CPU 32 sets the received graphical drawing instruction invalid at step S6. The CPU 32 can achieve this processing by simply not outputting the graphical drawing instruction to the drawing processing section 13. In this case, the CPU 32 does not carry out any drawing operation concerning this graphical drawing instruction. After ending the processing at step S6, the system control is passed to step S7, and the CPU 32 carries out the next processing. At steps S3, S4, and S6, the CPU 32 functions as the selection section 42.

By carrying out the above processing, the drawing processing of not changing the status of the page memory can be omitted. When the drawing processing is omitted, the processing including the read processing and the write processing that occupy the major portion of the drawing processing time can be omitted. Therefore, there is a large effect of a reduction in the processing time and an increase in the drawing speed.

In the above processing, the image data as the contents of the page memory 14 is transmitted to the printer engine 3 after ending the drawing necessary for the image of one page, while this is not illustrated in the drawing or not explained in the above. The drawing processing at step S5 and the drawing omission determination processing at step S2 for the next graphical drawing instruction shown in Fig. 4 may be carried out in parallel.

In the above processing, only one or two conditions may be selectively used out of the conditions (1) to (3) used in the drawing omission determination processing. The drawing of a graphic pattern having a large drawing area can be done based on only one determination, and therefore, this has particularly a large effect of a reduction in the processing time and an increase in the drawing speed. The drawing omission determination processing may be carried out only when a pattern concerning the graphical drawing instruction is a graphic pattern.

In the above embodiment, the drawing processing device carries out one function of the CPU 32 that is provided in the printer 1. However, the drawing processing device may be provided as an independent unit.

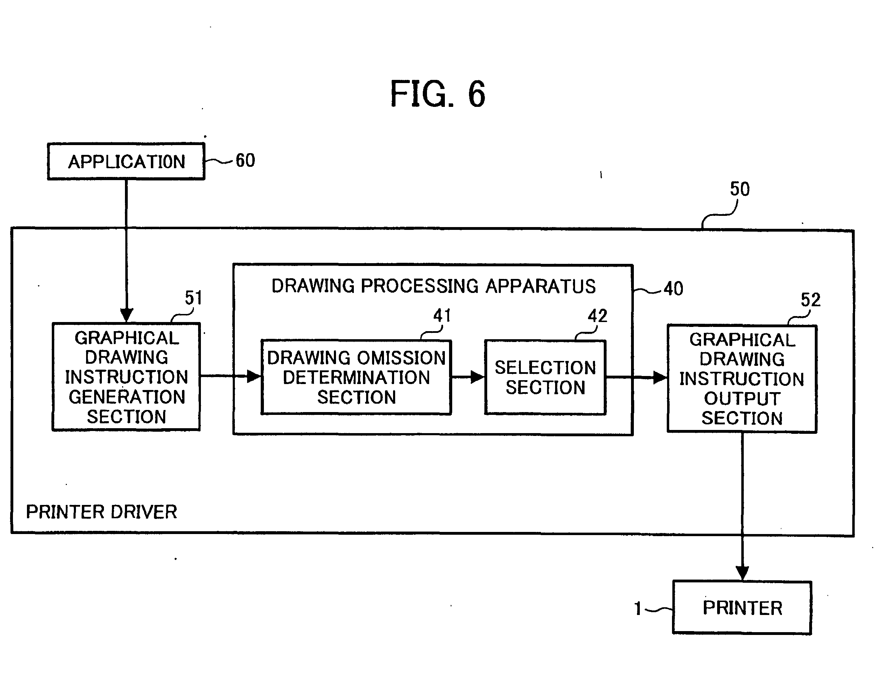

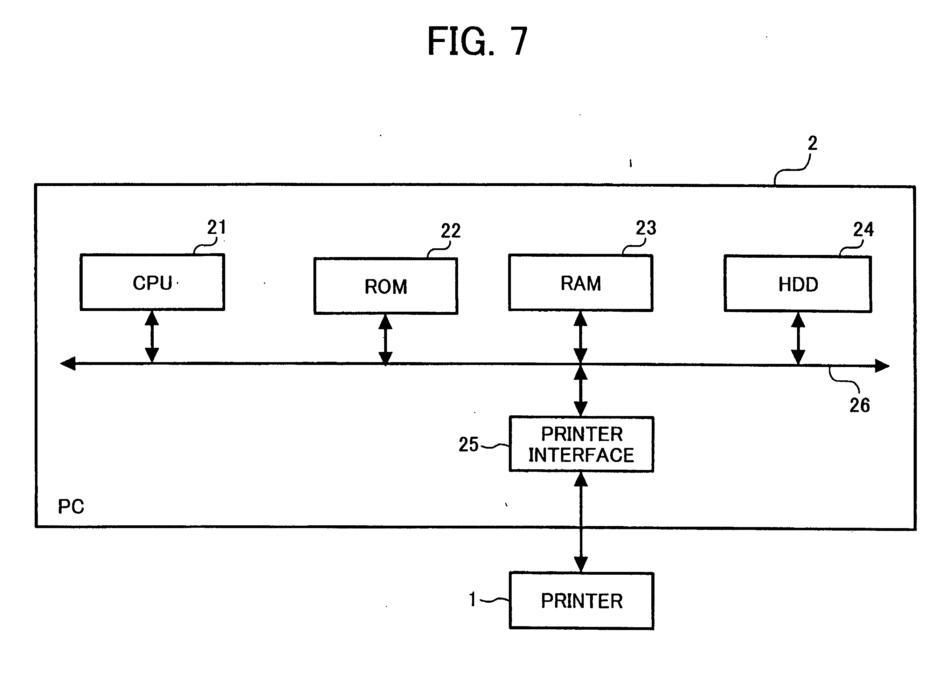

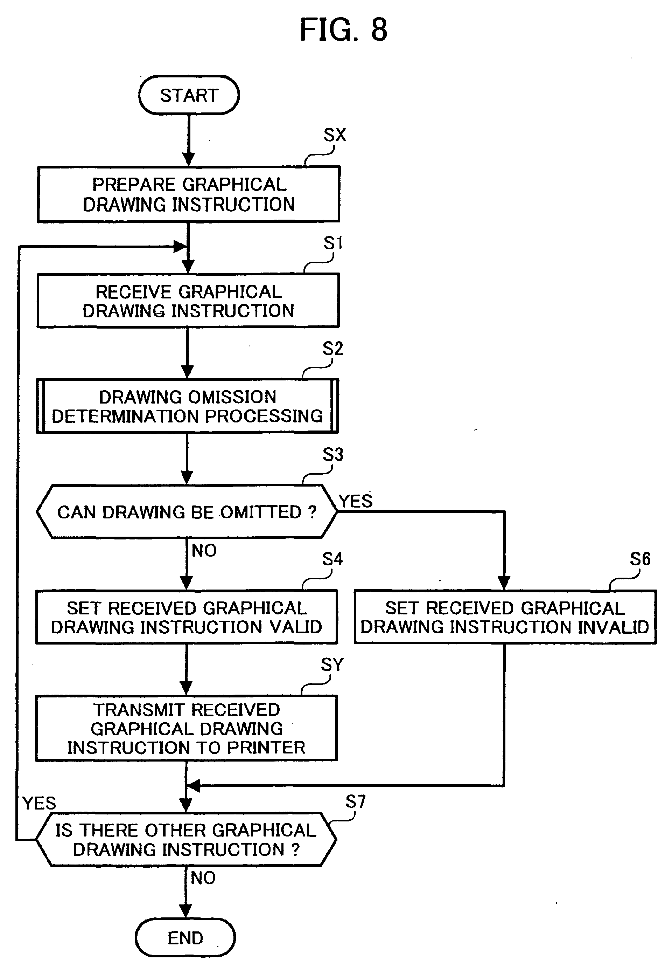

Next, a drawing processing device according to a second embodiment of the present invention, and a PC having this drawing processing device as the information processing apparatus will be explained. Fig. 6 is a block diagram of a functional configuration of the PC. Fig. 7 is a block diagram of a hardware configuration of the PC, Fig. 8 is a flowchart of an image formation instruction of the PC with an emphasis on the processing concerning a function of the drawing processing device. In Fig. 6, portions corresponding to those in Fig. 1 according to the first embodiment are assigned with like reference numerals,

In the second embodiment, the functions of the drawing processing device that are provided in the printer 1 according to the first embodiment are provided in the PC 2 as the information processing apparatus.

As shown in Fig. 7, the PC 2 has a hardware configuration comprising a CPU 21, a ROM 22, a RAM 23, a hard disk drive (hereinafter, "HDD") 24, and a printer interface 25, which are connected to each other via a system bus 26, A known PC can be suitably used when this PC has the printer interface 25 as a connector to connect between the PC 2 and the printer 1 as the image formation apparatus. The PC 2 can be connected with the printer 1 via a network such as a local area network (hereinafter, "LAN") or a local connection according to a USB or the like. in the second embodiment, the known printer 1 can be suitably used, This printer 1 does not need to have the function of the drawing processing device 40 like, in the first embodiment.

The ROM 22 or the HDD 24 of the PC 2 stores a necessary application program. The CPU 21 executes this program, thereby to make the CPU 21 function as the drawing processing device according to the present invention, and make the PC 2 function as the information processing apparatus according to the present invention.

Fig. 6 is the illustration of the functional configuration of the PC 2 that is used to instruct the printer 1 to form an image.

The PC 2 makes the CPU 21 execute a printer driver program that is stored in the ROM 22 or the HDD 24, thereby to make the CPU 21 function as a printer driver 50 that instructs the printer 1 to form an image. The printer driver 50 has functions of a graphical drawing instruction generation section 51, the drawing processing device 40, and a graphical drawing instruction output section 52.

On the other hand, when other application 60 that the CPU 21 executes requires an image formation, the application 60 instructs the printer driver 50 to form the image via a drawing interface called a graphics device interface (hereinafter, "GDI") as a graphic relevant module of an operating system (OS).

Following this instruction, the graphical drawing instruction generation section 51 of the printer driver 50 converts the drawing, instruction via the GDI into a graphical drawing instruction of a PDL format that is suitable for the printer language installed on the printer 1. Thereafter, the drawing processing device 40 processes the graphical drawing instruction obtained by the conversion.

In the first embodiment, the instruction of the PDL format is called a drawing instruction, and this drawing instruction is converted into a graphical drawing instruction according to the intermediate data. Then, the drawing processing device processes this graphical drawing instruction. On the other hand, when the function of the drawing processing device 40 is provided in the PC 2, like in the second embodiment, the drawing processing device 40 processes the instruction of the PDL format. The instruction of this format will be called a graphical drawing instruction. Both the instruction of the PDL format and the instruction according to the intermediate data include a basic graphical drawing instruction and a drawing attribute instruction, as explained above. Therefore, the drawing processing device 40 can process the instruction of the PDL format and the instruction according to the intermediate data in a similar manner.

The drawing processing device 40 has functions similar to those of the drawing processing device 40 according to the first embodiment, except that the formats of the instructions to be processed are different,

The graphical drawing instruction out put section 52 has a function of outputting to the printer 1 only a graphical drawing instruction that the selection section 42 of the drawing processing device 40 sets valid from among the graphical drawing instructions that the graphical drawing instruction generation section 51 generates, and making the printer 1 form the image based on this graphical drawing instruction. This data is actually output to the printer 1 via the printer interface 25.

Like the printer 1 explained in the first embodiment, the PC 2 has a feature in the processing of the drawing processing device 40. The drawing processing device 40 carries out a drawing omission determination processing according to the drawing attribute of a pattern concerning the graphical drawing instruction. The processing that the PC 2 carries out to instruct the printer 1 to form an image will be explained next with an emphasis on this drawing omission determination processing. A major portion of the processing is similar to the processing explained with reference to Fig, 4 and Fig. 5 in the first embodiment. Therefore, only different points will be explained next.

When there is an image formation request from the application 60, the CPU 21 of the PC 2 executes a program stored in either the ROM 22 or the HDD 24, and starts the processing shown in the flowchart of Fig. 8.

First, at step SX, the CPU 21 converts the drawing instruction via the GDI from the application 60 into a graphical drawing instruction of the PDL format suitable for the printer language that is installed on the printer 1. At step SX, the CPU 21 functions as the graphical drawing instruction generation section 51.

At step S1, the CPU 21 receives the graphical drawing instruction generated at step SX as the graphical drawing instruction to be transmitted to the printer 1. Thereafter, the CPU 21 carries out the processing substantial similar to that explained with reference to the flowcharts shown in Fig. 4 and Fig. 5, except the following, The CPU 21 executes the processing at step SY in place of the processing at step S5, thereby to transmit the received graphical drawing instruction to the printer 1. At this step SY, the CPU 21 and the printer interface 25 function as output units. The CPU 21 makes the graphical drawing instruction valid, and outputs a result to the graphical drawing instruction output section 52.

Based on the above processing, the PC 2 can omit the drawing instruction that does not change the status of the page memory. Therefore, the printer 1 can also omit the operation concerning this instruction. Consequently, in addition to the effect obtained in the first embodiment, there is an effect that the data transmission quantity between the PC 2 and the printer 1 can be reduced. Further, the interpreter 11 of the printer 1 can reduce the processing quantity. As a result, the drawing speed and the printing speed can be increased.

The second embodiment may be changed in the same manner as the first embodiment.

Modifications of the first and second embodiments will be explained. Figs, 9 and 10 are illustrations of examples of a drawing processing instruction that explains about these modifications.

In the first and second embodiments, color is used as one parameter for one pattern. When a color printer is used to form an image, colors are broken into four color planes of black (K), cyan (C), magenta (M), and yellow (Y), and the color printer forms the image with a panel sequential method. Because of a configuration of the printer engine 3, the page memory 14 is also provided for each color plane in many cases. Therefore, the color printer draws an image on the page memory for each color plane. Accordingly, in this case, the color information Included in the drawing attribute may be broken down into color planes, and a drawing omission determination may be carried out for each color plane.

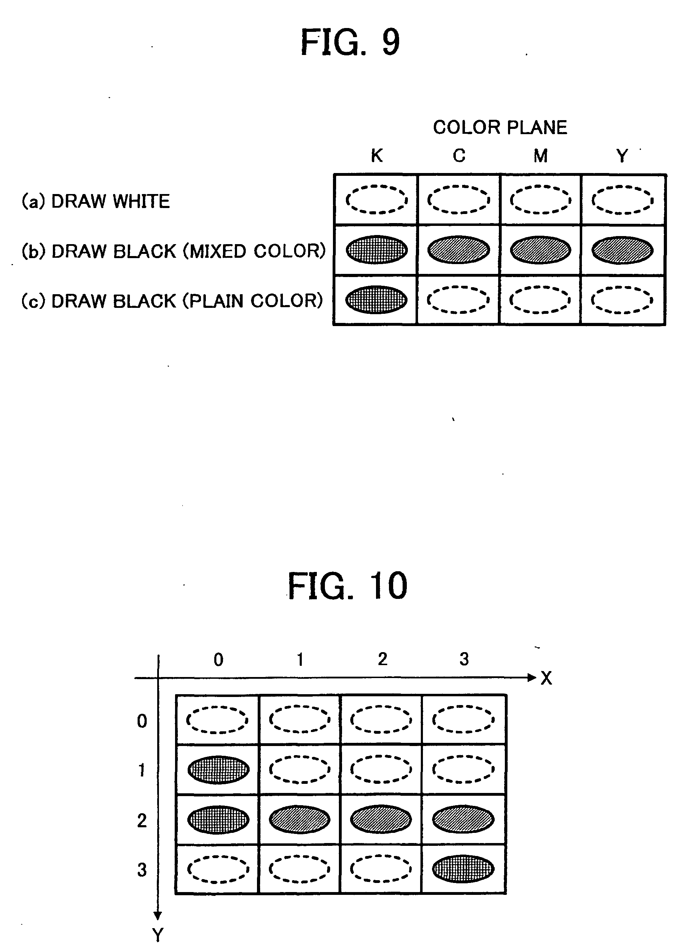

A determination processing of the graphical drawing instruction for each color image as shown in Fig. 9 will be explained. It is assumed that the modification method is OR for all the Images. The ellipses indicated by a broken line represent that these color planes have the lowest color density.

When white images are drawn, as in (a) in Fig. 9, even if a determination is not made for each color plane, the drawing can be omitted as explained in the first embodiment. Even if a determination is made for each color plane, the drawing of all the color planes can be omitted because all the color planes are in the lowest color density.

When a black color of mixed colors (i,e., K = 100%, and C = M = Y = 50%) is drawn, as in (b) in Fig. 9, the drawing cannot be omitted unless a determination is made for each color plane. Even if a determination is made for each color plane, the drawing cannot be omitted because all the color planes are not in the lowest color density.

However, a black color of a plain color (i.e., K = 100%, and C = M = Y = 0%) is drawn, as in (c) in Fig. 9, the drawing cannot be omitted at all unless a determination is made for each color plane, because the color is not in the lowest color density. When a determination is made for each color plane, the drawing can be omitted because the color planes of C, M, and Y are in the lowest color density, although the drawing cannot be omitted for the B plane as this is not in the lowest color density.

As explained above, when the drawing omission determination is made for each color plane, the opportunity of omitting the drawing increases, which further increases the drawing speed.

In the first and second embodiments, the drawing omission determination is made for each pattern. However, substantially all image patterns such as bit maps and photographic images use a plurality of colors. Therefore, when the image patterns are used, it is preferable that the drawing omission determination is made for each, pixel of the patterns by also referring to the image data concerning these patterns. With this arrangement, when a most part of the image pattern is white (i.e., in the lowest color density) and also when the modification method is OR or XOR, the drawing of the white portion can be omitted, thereby improving the drawing speed,

In this case, continuous image portions having pixels of the same color may be detected from an image pattern, and the drawing omission determination may be made for these continuous image portions. In this case, there may be detected only the continuous image portions having the pixels of the same color in a proceeding direction of the drawing processing (i.e., the X direction in Fig. 10).

For example, image data of 4 times 4 pixels shown in Fig. 10 has ellipses drawn in a broken line that express white pixels, and other ellipses that express colored pixels. There are four pixels that have the same color and that continue in the X direction. These pixels are expressed in coordinates of (0, 0, 3), (1, 1, 3), (2, 1, 3), and (3, 0, 2), where the coordinates represent (Y coordinate, starting point X coordinate, end point X coordinate). When the drawing omission determination is made for each continuous portion of pixels of the same color, the determination is made seven times in total. When the modification method is OR, for example, the drawing can be omitted for three portions except the portion expressed by (2, 1, 3). Based on this method, the number of pixels of which drawing can be omitted is the same as those when the determination is made for each pixel. However, the number of times of making the determination can be substantially reduced as compared with 16 times when the determination is made for each pixel. Consequently, the processing speed can be substantially increased.

In the example shown in Fig. 10, the pixels of Y = 1 and Y = 2 at X = 0 are in the same colors. However, even when a determination is made about these pixels that continue in the Y direction, a result of the determination made at the time of the processing of the pixel at Y = 1 needs to be stored until when the pixel at Y = 2 is processed. Therefore, this has a smaller effect of improvement in the processing speed as compared with the improvement obtained when the determination is made in the X direction.

When the drawing processing is executed in the word length unit of the CPU, the drawing determination processing may be carried out in the word length unit, that is, for each image of the data quantity of one word. For example, when one word has 32 bits, and one pixel has eight bits, the drawing determination processing is carried out for every four pixels.

Therefore, in this case, even when the drawing of a part of the four pixels can be omitted, the drawing of these pixels cannot be omitted. However, whether all the pixels to be determined are in the lowest color density can be judged from whether the value of the word length data is zero (i.e., OFF for all the bits). Whether all the pixels are in the highest color density can be judged from whether the word length data is ON for all the bits. Accordingly, the determination can be made at a high speed, and the total processing speed is improved as a result.

When the PC 2 has the function of the drawing processing device 40 like in the second embodiment, and also when a pattern using a plurality of colors like an image pattern includes a color of which drawing can be omitted, a graphical drawing instruction may be transmitted to the printer 1 by adding data to the effect that the drawing of this color can be omitted. The data of the image pattern may be transmitted directly to the printer 1,

For example, when there is a graphical drawing instruction to draw an image pattern consisting of two color pixels of white and black according to the modification method of OR, the drawing of the white pixels can be omitted. Therefore, this message is added to the data.

The printer interprets this information, and does not carry out any processing to these white pixels. With this arrangement, the drawing can be omitted in a similar manner when the data transfer is not carried out.

When the drawing of the whole pixels can be omitted, the graphical drawing instruction itself may not be transmitted.

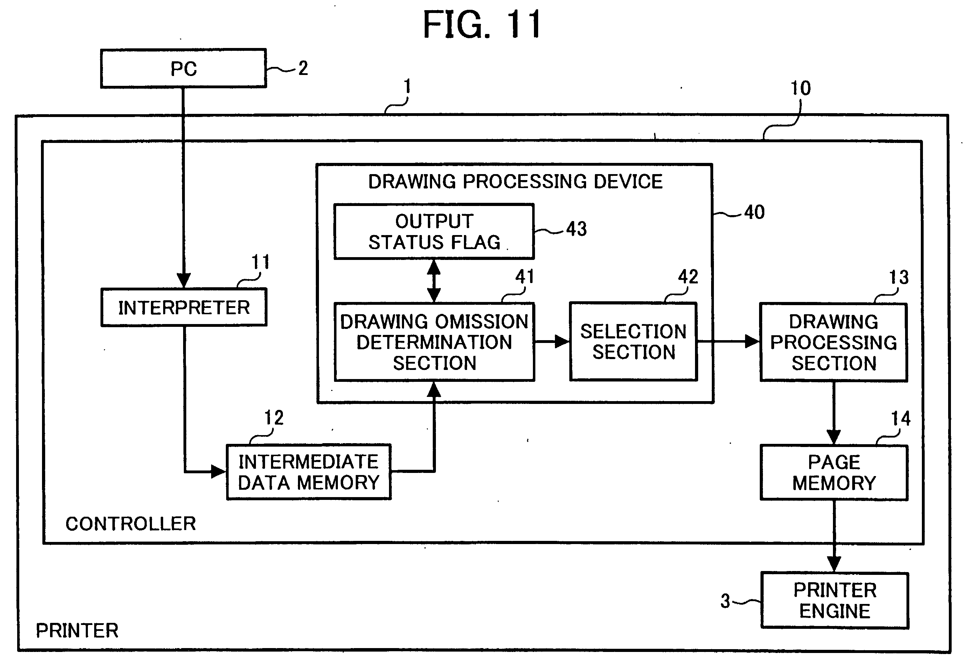

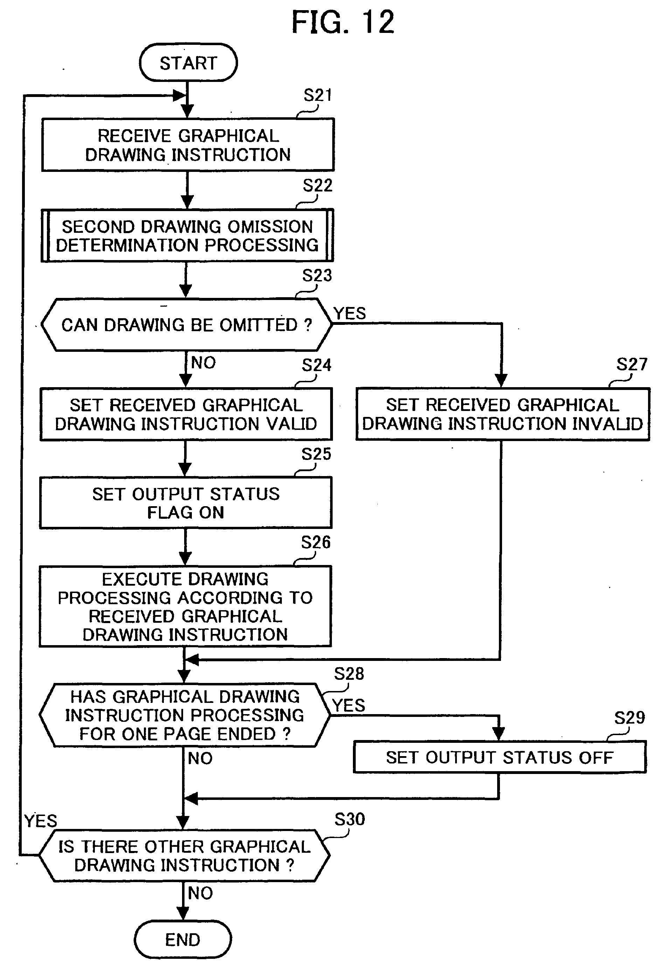

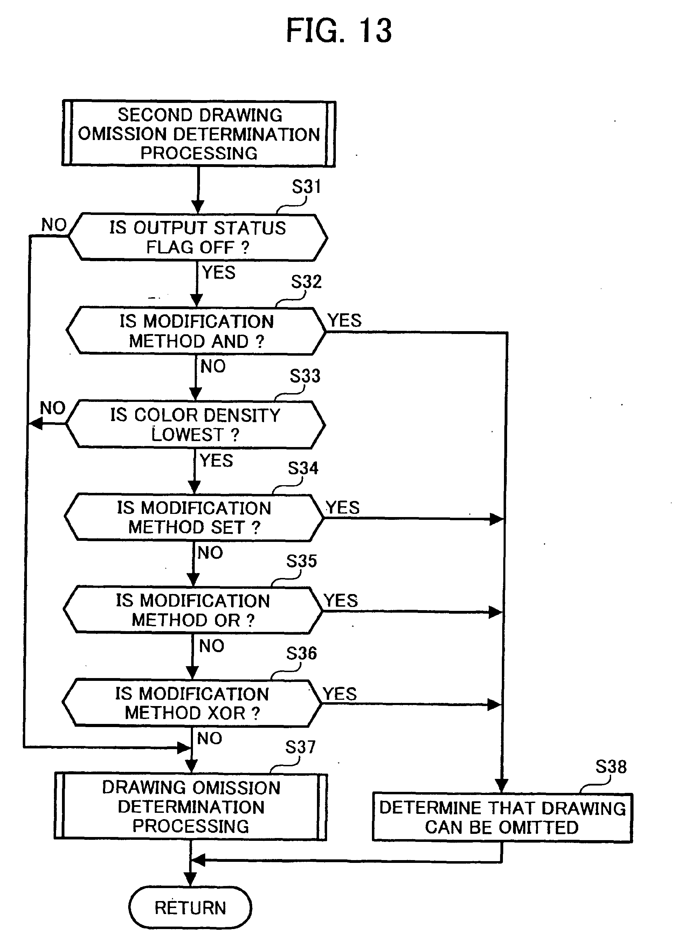

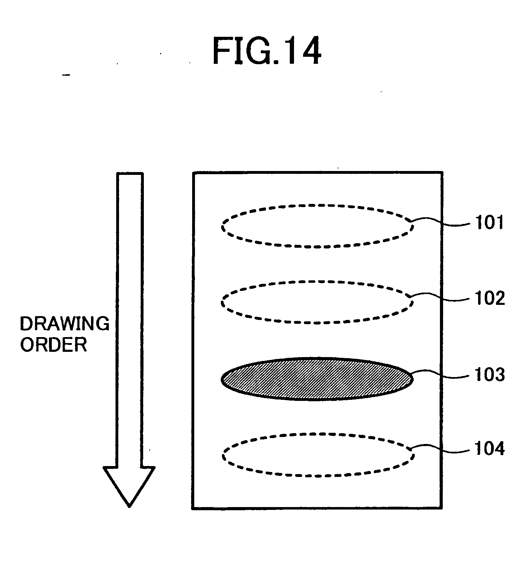

Next, a drawing processing device according to a third embodiment of the present invention, and a printer having this drawing processing device as the information processing apparatus will be explained. Fig. 11 is a block diagram of a functional configuration of a controller of the printer. Fig. 12 is a flowchart of the image formation processing of the printer with an emphasis on the processing concerning a function of the drawing processing device. Fig. 13 is a flowchart of a second drawing omission determination processing shown in Fig. 12. Fig. 14 is an illustration of an example of a drawing processing instruction that explains about the second drawing omission determination, processing of the printer. In Fig. 11, portions corresponding to those in Fig. 1 according to the first embodiment are assigned with like reference numerals.

In the third embodiment, the second drawing determination processing is carried out in addition to the drawing determination processing explained in the first embodiment. This second drawing determination processing will be mainly explained.

The hardware configuration of the printer 1 is similar to that of the printer 1 according to the first embodiment. Fig. 11 shows the functional configuration. The printer 1 is different from the printer 1 according to the first embodiment in the following points. The drawing processing device 40 has an output status flag 43 that indicates whether the selection section has already set a certain graphical drawing instruction valid. The drawing omission determination section 41 also refers to the output status flag 43 at the time of determining about the drawing omission. A register provided in the CPU 32 can achieve the function of the output status flag 43.

In the drawing processing device 40 of the printer 1, the drawing omission determination section 41 carries out a second drawing omission determination. In addition to the operation explained in the fist embodiment, the drawing omission determination section 41 carries out the following processing. When the output status flag 43 indicates that the graphical drawing instruction is not set valid yet (i.e., OFF), the drawing omission determination section 41 determines that the drawing concerning the graphical drawing instruction can be omitted when the drawing attribute of a pattern concerning the graphical drawing instruction does not change the contents of the page memory 14 before and after the drawing if the memory at the drawing destination is in an initialized state at the time of carrying out the drawing concerning the graphical drawing instruction.

For example, assume that the page memory 14 has all the pixels reset to the lowest color density (white) of the bit off, before the drawing concerning the first graphical drawing instruction. In this status, the contents of the page memory 14 are not changed in the conditions of (1) to (3) explained in the first embodiment, and also in the following conditions,
(4) when the color concerning the drawing is in the lowest color density, and also when the modification method is SET; and
(5) when the color concerning the drawing is optional, and also when the modification method is AND.
Therefore, when the graphical drawing instructions are not set valid yet, the graphical drawing instructions of these drawing attributes are also omitted.

The printer 1 does not refer to the contents of the page memory 14 at the time of determining about the drawing omission. However, by referring to the output status flag 43, when the drawing instructions are OFF, it is known that the page memory 14 is in the initialized state having all the pixels reset to the bit off: Therefore, the drawing can be omitted In the conditions (4) and (5), in addition to the conditions (1) to (3) explained in the first embodiment. The CPU 32 can refer to the output status flag 43 faster than the page memory 14. Therefore, when the CPU 32 refers to the output status flag 43 during the drawing omission determination, this does not substantially affect the determination processing speed.

The image formation processing that the printer 1 carries out will be explained with an emphasis on the drawing omission determination processing. Most of the steps of the processing are common to those explained with reference to Fig. 4 and Fig. 5 in the first embodiment, Therefore, the explanation of these steps will be omitted.

In forming an image, the CPU 32 of the printer 1 executes a program stored in the ROM 33, thereby to start the processing shown in a flowchart of Fig. 12.

First, at step S21, the CPU 32 receives a graphical drawing instruction to be executed next, in a similar manner at step S1 shown in Fig. 4. At step S22, the CPU 32 executes a second drawing omission determination processing shown in a flowchart of Fig. 13, and determines whether the drawing concerning the graphical drawing instruction can be omitted.

In the second drawing omission determination processing, at step S31, the CPU 32 refers to the output status flag 43, and determines whether this flag is OFF. When the output status flag 43 is OFF, the system control is passed to step S32. At step S32, the CPU 32 refers to the drawing attribute of the pattern concerning the graphical drawing instruction, and determines whether the modification method is AND,

When the modification method is AND as a result of the determination made at step S32, the drawing attribute does not change the contents of the page memory 14 before and after the drawing, when the page memory 14 is in the initialized state. Therefore, at step S38, the CPU 32 determines that the drawing concerning the graphical drawing instruction can be omitted, and the process returns to the start of the processing.

When the modification method is not AND as a result of the determination made at step S32, the system control is passed to step S33. At step S33, the CPU 32 determines whether the color density is the lowest. When the pattern concerning the graphical drawing instruction includes a plurality of colors, none of the colors is handled, The above modification may also be used,

When the color density is the lowest, the system control is passed to step S34. At step S34, the CPU 32 determines whether the modification method is SET. When the modification method is SET, the CPU 32 determines at step S38 that the drawing concerning the graphical drawing instruction can be omitted. Then, the process returns to the start of the processing.

When the modification method is not SET at step S34, the CPU 32 determines whether the modification method is OR and XOR at steps S35 and S36 respectively. When the modification method is OR and XOR at steps S35 and S36 respectively, the CPU 32 determines at step S38 whether the drawing concerning the graphical drawing instruction can be omitted. Then, the process returns to the start of the processing.

When the modification method is neither OR nor XOR at steps S35 and S36 respectively, the system control is passed to step S37. The CPU 32 carries out the drawing omission determination processing explained with reference to Fig. 5 in the first embodiment. Then, the process returns to the start of the processing. When a result of the determination made at step S31 or step S32 is NO, and also when a determination is made at step S38 that the drawing can be omitted, a further determination processing is not necessary. Therefore, the process returns to the start of the processing.

In the second drawing omission determination processing, the CPU 32 determines that the drawing can be omitted in the conditions (4) and (5) when the page memory 14 is in the initialized state, in addition to the conditions (1) to (3) explained in the first embodiment. The CPU 32 determines that the drawing cannot be omitted in other cases. The information that is used to make this determination is only the drawing attribute concerning the graphical drawing instruction and the output status flag 43.

In the processing shown in Fig. 13, the CPU 32 functions as the drawing omission determination section 41.

After ending the drawing omission determination processing, the system control is passed to step S23 shown in Fig. 12, and the CPU 32 carries out the subsequent processing. The processing at steps S23, S24, S26, and S27 is similar to that at steps S3 to S6 shown in Fig. 4 respectively. However, in the processing shown in Fig. 12, after the processing shown in Fig. 4, the CPU sets a certain graphical drawing instruction valid, and sets at step S25 the output status flag 43 ON to indicate that the page memory 14 is not in the initialized state.

At step S28, the CPU 32 determines whether the processing of the graphical drawing instructions for one page has ended. When the processing of the graphical drawing instructions for one page has ended, the CPU 32 returns the setting of the output status flag 43 to OFF, and the system control is passed to step S30. When the processing of the graphical drawing instructions for one page has not ended, the system control is passed to step S30. In processing a series of graphical drawing instructions to indicate the image formation over a plurality of pages, the CPU 32 instructs to draw an image onto a new page after ending the drawing on one page, after clearing the page memory 14, or into a new region where the page memory 14 is cleared. In the new region to draw an image, the setting of the output status flag 43 is returned to OFF each time after ending the processing for one page, in order to indicate that the page memory 14 is in the initialized state. In other words, the output status flag 43 indicates whether the selection section 42 has set a certain graphical drawing instruction valid, for each graphical drawing instruction concerning the image for one page.

Based on the above processing, the drawing processing that does not change the page status can be omitted more broadly than that in the first embodiment. As a result, the processing time can be saved, and the drawing speed can be increased.

Consider the processing of a graphical drawing instruction to instruct a drawing of four ellipses 101 to 104 in this order as shown in Fig. 14. An ellipse of a broken line represents white color, and an ellipse of a solid fine represents other color. The modification method used is SET.

First, when a drawing omission determination processing as explained in the first embodiment is carried out for the drawing of the ellipse 101, the CPU 32 determines that the drawing cannot be omitted because the modification method is SET, Then, the drawing processing is carried out. However, the drawing processing device 40 according to the third embodiment refers to the output status flag 43, and finds that this flag is OFF at this determination point. Therefore, the CPU 32 can determine that the drawing can be omitted. As the drawing is white on the white background, the drawing can be actually omitted.

At the time of making a determination about the omission of the drawing of the ellipse 102, no drawing is carried out yet, and the output status flag 43 is OFF. Therefore, the drawing of the ellipse 102 can also be omitted.

The drawing of the ellipse 103 cannot be omitted, because the ellipse 103 has a color and the modification method is SET. The output status flag 43 becomes ON. Therefore, the contents of the subsequent determinations become the same as those in the first embodiment, The drawing of the ellipse 104 cannot be omitted. Once a colored pattern is drawn, the contents of the page memory 14 change when white is set to superimpose this pattern. Therefore, whether the drawing can be omitted cannot be known without referring to the contents of the page memory 14.

However, from the above example, it is clear that the drawing processing device 40 or the printer 1 according to the third embodiment can omit the drawing of more images than that according to the first embodiment.

Particularly, when the graphic application or the presentation application instructs a printing, in many cases, the CPU instructs an instruction to fill out (set) the whole surface at the header of the page in order to clear this page. However, this processing becomes unnecessary when the whole pixels are reset to white at the time of starting the drawing, On the other hand, as the drawing area is large, the drawing time becomes long. Accordingly, when the SET instruction is omitted by making the above determination, the drawing speed can be improved substantially.

The third embodiment may be changed in the same manner as the first embodiment.

In the third embodiment, the page memory 14 is reset to OFF for the whole bits in the initialized state. However, when the bits are reset to different statuses, the determination condition about the omission of the drawing can be changed according to each status.

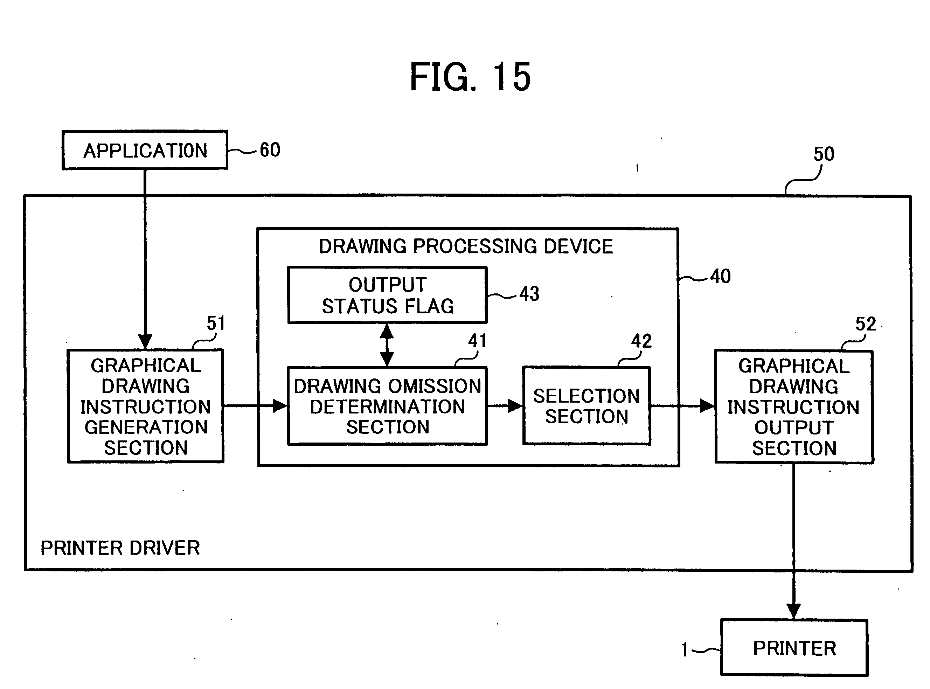

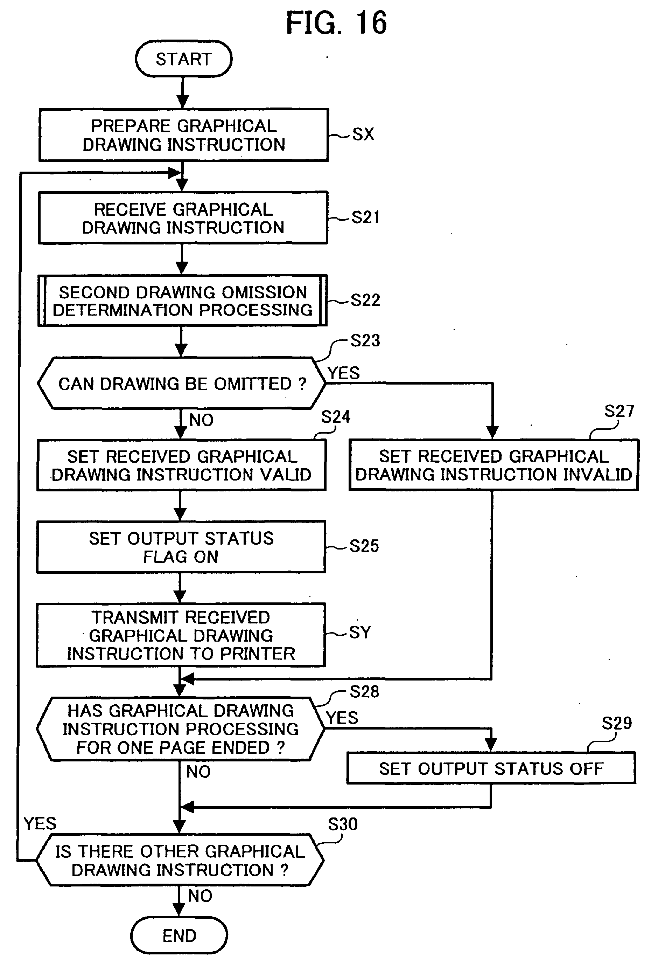

A drawing processing device according to a fourth embodiment of the present invention, and a PC having this drawing processing device as the information processing apparatus will be explained. Fig. 15 is a block diagram of a functional configuration of the PC. Fig. 16 is a flowchart of an image formation instruction of the PC with an emphasis on the processing concerning a function of the drawing processing device. In Fig. 15, portions corresponding to those in Fig. 6 according to the second embodiment are assigned with like reference numerals,

In the fourth embodiment, the second drawing determination processing similar to that explained in the third embodiment is carried out in addition to the drawing determination processing explained in the second embodiment. This second drawing determination processing will be mainly explained.

The hardware configuration of the PC 2 is similar to that of the PC 2 according to the second embodiment. Fig. 15 shows the functional configuration. The PC 2 is different from the PC 2 according to the second embodiment in the following points. The drawing processing device 40 has the output status flag 43 that indicates whether the selection section has already set a certain graphical drawing instruction valid, The drawing omission determination section 41 also refers to the output status flag 43 at the time of determining about the drawing omission. A register provided in the CPU 21 can achieve the function of the output status flag 43.

The processing that the PC 2 carries out to instruct the printer 1 to form an image will be explained with an emphasis on this drawing omission determination processing. A major portion of the processing is similar to the processing explained with reference to Fig, 12 and Fig, 13 in the third embodiment. Therefore, only different points will be explained next.

When there is an image formation request from the application 60, the CPU 21 of the PC 2 executes a program stored in either the ROM 22 or the HDD 24, and starts the processing shown in the flowchart of Fig. 16.

First, at step SX, the CPU 21 converts the drawing instruction via the GDI from the application 60 into a graphical drawing instruction of the PDL format suitable for the printer language that is installed on the printer 1. At step SX, the CPU 21 functions as the graphical drawing instruction generation section.

At step S21, the CPU 21 receives the graphical drawing instruction generated at step SX as the graphical drawing instruction to be transmitted to the printer 1. Thereafter, the CPU 21 carries out the processing substantially similar to that explained with reference to the flowcharts shown in Fig. 12 and Fig. 13, except the following. The CPU 21 executes the processing at step SY in place of the processing at step S26, thereby to transmit the received graphical drawing instruction to the printer 1. At this step SY, the CPU 21 and the printer interface 25 function as output units. The CPU 21 makes the graphical drawing instruction valid, and outputs a result to the graphical drawing instruction output section 52.

Based on the above processing, the PC 2 can omit the drawing instruction that does not change the status of the page memory. Therefore, the printer 1 can also omit the operation concerning this instruction. Consequently, in addition to the effect obtained in the third embodiment, there is an effect that the data transmission quantity between the PC 2 and the printer 1 can be reduced. Further, the interpreter 11 of the printer 1 can reduce the proeessing quantity. As a result, the drawing speed and the printing speed can be increased.

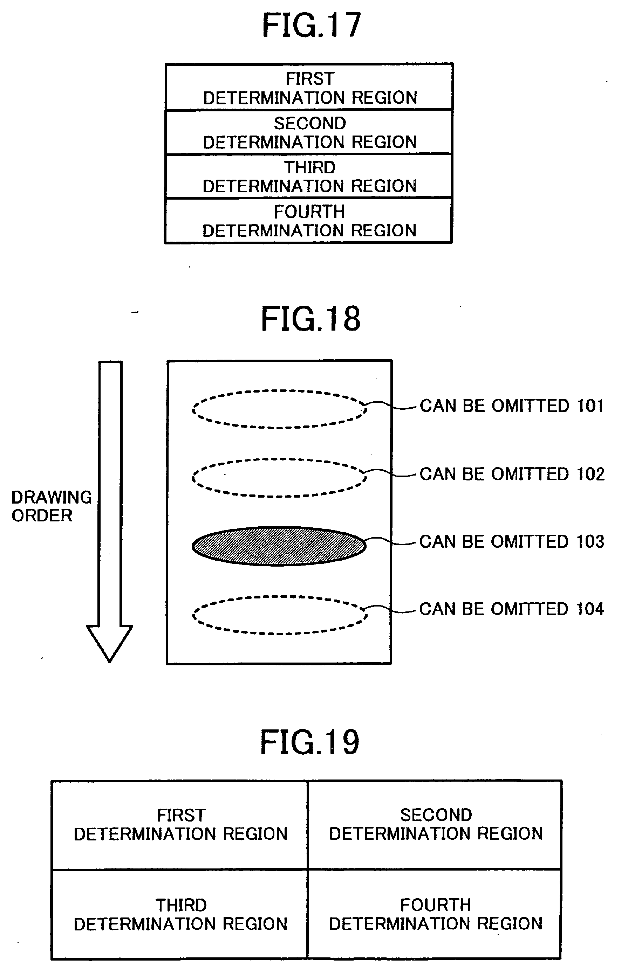

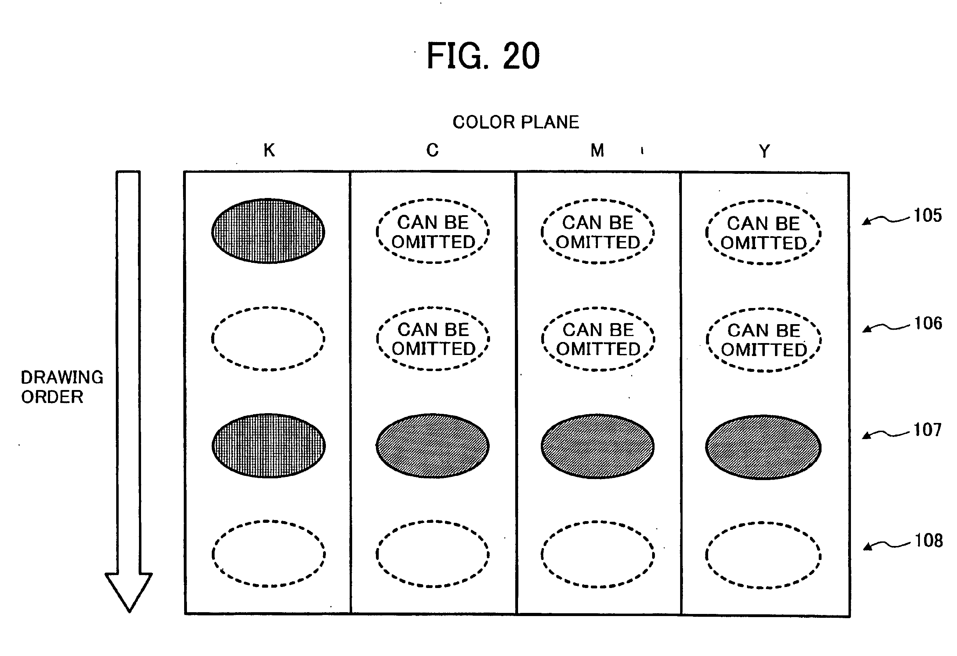

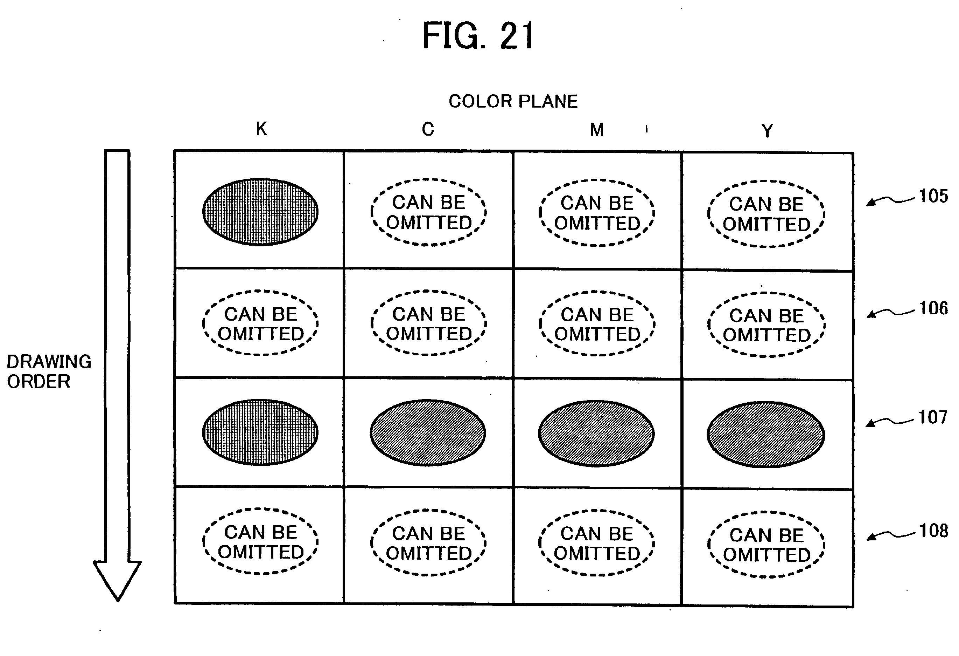

Modifications of the third and fourth embodiments will be explained next. Fig. 17 is an illustration of a state that one page is divided into a plurality of determination regions according to a plurality of bands. Fig. 18 is an illustration of a graphical drawing in the state shown in Fig. 17. Fig, 19 is an illustration of a state that one page is divided into a plurality of determination regions different from those shown in Fig. 17. Fig. 20 is an illustration of an example of drawing a pattern for each plane. Fig. 21 is an illustration of an example of drawing a pattern in a state that a page is divided into determination regions for each color plane. in Fig. 17 to Fig. 21, drawing that can be omitted according to a determination made about the drawing omission is indicated to this effect,

In the third and fourth embodiments, only one output status flag 43 is provided. Once the drawing is carried out within the page, the output status flag 43 is set to ON for the whole page.

However, one page may be divided into optional determination regions. The output status flag 43 may be provided in each determination region, and the drawing omission determination processing may be carried out for each determination region to which the drawing region concerning the graphical drawing instruction belongs. Even if a certain pattern is drawn into a certain determination region, the page memory 14 is in the initialized state in other determination regions. Therefore, the drawing into other determination regions assumes that the page memory 14 is still in the initialized state.

In many cases, a color image of one page is divided into a plurality of bands for each predetermined number of main scanning lines, and the drawing is carried out for each band. Therefore, each ban may be used as a determination region. Fig. 17 is an illustration of a state that one page is divided into four determination regions according to bands.

In this state, consider that a graphical drawing instruction is processed to draw ellipses 101 to 104 similar to those shown in Fig. 14 into first to fourth determination regions, as shown in Fig. 18.

The drawing is omitted for the ellipses 101 and 102 that are set to white, and the output status flag 43 is in the OFF status at this point of time, as explained in Fig. 14. However, even when the drawing is carried out without omitting the drawing of the third ellipse 103, only the output status flag 43 in the third determination region is set to ON. Therefore, as the output status flag 43 in the fourth determination region is still in the OFF status, a determination can be made that the drawing of the ellipse 104 that is set to white can also be omitted.

Consequently, when one page is divided into a plurality of determination regions, and also when the drawing processing determination is made for each determination region, more drawing processing can be omitted, and the drawing speed can be increased. However, when one page is divided into too many determination regions, the overhead of the determination processing and the management processing of the flags becomes too large, which lowers the effect of the speed increase.

A graphical drawing instruction can also be applied to a pattern having a plurality of determination regions. In this case, when a determination is made that the drawing of only a part of the determination regions can be omitted, the drawing processing is carried out for only the determination regions of which drawing cannot be omitted.

The page division method is not limited to the division into bands. For example, the page may be divided into determination regions in a lattice as shown in Fig. 19.

When a color printer is used to form an image, the output status flag 43 may be provided for each color plane, and the drawing omission determination may be carried out for each color plane. Consider the processing of a graphical drawing instruction to instruct a sequential drawing of the ellipses 105 to 108 as shown in Fig. 20. When the ellipse 105 is drawn, the output status flag 43 of the plane K becomes ON, but the output status flags 43 of the color planes C, M, and Y are not set to ON because the drawing of these planes can be omitted. Accordingly, at the time of drawing the ellipse 106, a determination can be made that the drawing of the panes C, M, and Y can be omitted,

Consequently, the drawing omission determination can be made more precisely, thereby to omit the drawing of more planes, and improve the drawing speed.

Further, the output status flag 43 may be provided for each determination region and for each color plane, thereby to make a determination about the drawing omission. As illustrated in Fig. 21, consider the processing of a graphical drawing instruction to instruct a sequential drawing of the ellipses into the determination regions in a similar manner shown in Fig. 20. When the ellipse 105 is drawn, the output status flag 43 of the first determination region of the plane K becomes ON, but the output status flag 43 of the second determination region is still OFF, Therefore, a determination can be made that the drawing in the plane K of the ellipse 106 can also be omitted. After the drawing is carried out in each color plane of the ellipse 107, a determination can be made that the drawing in different determination regions of the ellipse 108 can be omitted.

Accordingly, when the drawing omission determination is made more precisely than that for only each color plane, the drawing of more planes can be omitted, and the drawing speed can be more improved.

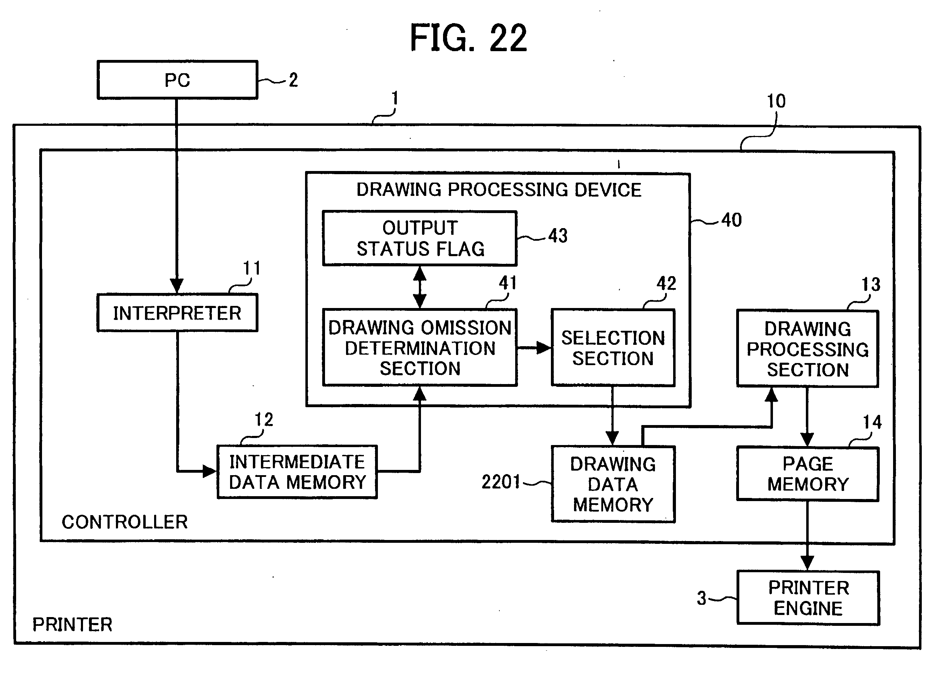

Next, a printer as the image formation apparatus according to a fifth embodiment of the present invention will be explained. Fig. 22 is a block diagram of a functional configuration of a controller of the printer. In Fig. 22, portions corresponding to those in Fig. 11 according to the third embodiment are assigned with like reference numerals.

In the third embodiment, the graphical drawing instructions that the selection section determines as valid are sequentially transmitted to the drawing processing section 13. However, in the fifth embodiment, the selection section 42 once stores the graphical drawing instructions that are determined as valid into a drawing data memory 2201.

The drawing data memory 2201 stores the graphical drawing instructions that the selection section 42 determines as valid out of the graphical drawing instructions that are stored in the intermediate data memory 12.

The drawing processing section 13 collectively reads the graphical drawing instructions stored in the drawing data memory 2201, and carries out a processing similar to that of the printer according to the third embodiment.

Other configurations of the printer have functions similar to those of the printer according to the third embodiment. The printer carries out other processing that are similar to those of the printer according to the third embodiment, and therefore, their explanation will be omitted.

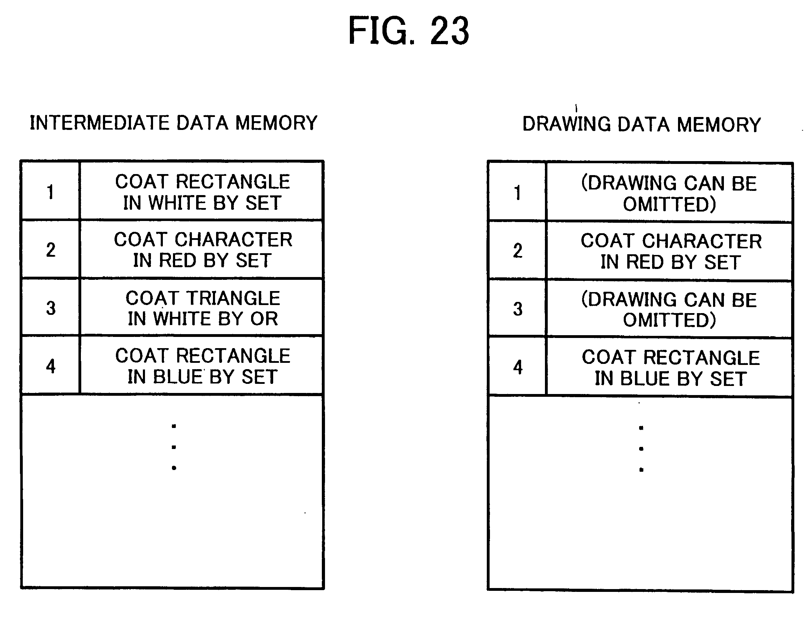

Fig. 23 is an explanatory diagram of the contents of the graphical drawing instruction stored in the intermediate data memory 12 and the contents of the graphical drawing instruction stored in the drawing data memory 2201.

As shown in Fig. 23, the drawing data memory 2201 stores only the graphical drawing instruction that the selection section 42 determines as valid, according to the processing similar to that according to the third embodiment.

As explained above, according to the printer of the fifth embodiment, the drawing data memory 2201 stores the graphical drawing instruction that the selection section 42 determines as valid. The drawing processing section 13 collectively reads and processes the graphical drawing instructions that are stored in the drawing data memory 2201. Therefore, the processing efficiency can be improved.

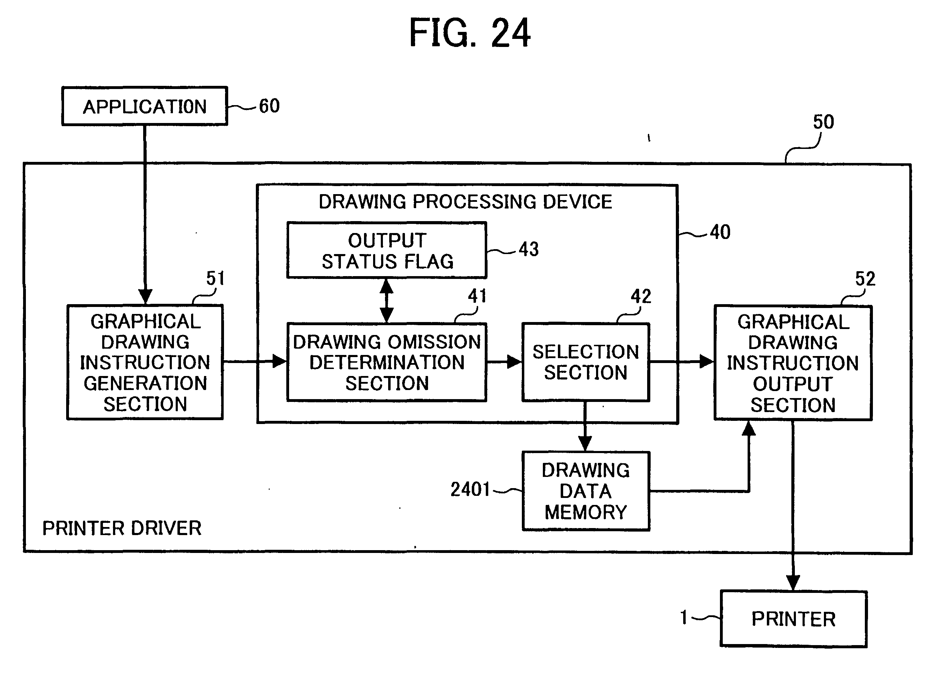

Next, a PC as the image formation apparatus according to a sixth embodiment of the present invention will be explained. Fig. 24 is a block diagram of a functional configuration of the PC. In Fig. 24, portions corresponding to those in Fig. 15 according to the fourth embodiment are assigned with like reference numerals.

In the fo.urth embodiment, the graphical drawing instructions that the selection section determines as valid are sequentially transmitted to the drawing processing section 13. However, in the sixth embodiment, the selection section 42 once stores the graphical drawing instructions that are determined as valid into a drawing data memory 2401.

The drawing data memory 2401 stores the graphical drawing instructions that the selection section 42 determines as valid out of the graphical drawing instructions,

The graphical drawing instruction output section 52 collectively reads the graphical drawing instructions stored in the drawing data memory 2401, and carries out a processing similar to that of the printer driver 50 of the PC according to the fourth embodiment.

Other configurations of the graphical drawing instruction output section 52 have functions similar to those of the printer driver 50 according to the fourth embodiment. The graphical drawing instruction output section 52 carries out other processing that are similar to those of the printer driver 50 according to the fourth embodiment, and therefore, their explanation will be omitted.

As explained above, according to the PC of the sixth embodiment, the drawing data memory 2401 stores the graphical drawing instruction that the selection section 42 determines as valid. The graphical drawing instruction output section 52 collectively reads and processes the graphical drawing instructions that are stored in the drawing data memory 2401. Therefore, the processing efficiency can be improved.

In the above embodiments, the printer is used as the image formation apparatus, and the PC is used as the information processing apparatus. However, it is needless to mention that the image formation apparatus and the information processing apparatus are not limited to the printer and the PC. The drawing processing device is not limited to the one that is mounted on these devices or that constitutes a part of the functions of these devices.

The computer program according to the present invention makes a computer function as a controller of the drawing processing device 40, the printer 1, or the PC 2. When the computer executes this program, the computer can function as a controller of the drawing processing device 40, the printer 1, or the PC 2, thereby to obtain the effects described above.

The computer program may be stored in the memory such as the ROM or the HDD of the computer. The computer program can also be stored into a CD-ROM or a flexible disk as a recording medium, or a nonvolatile memory such as a static RAM (SRAM), an electrically erasable programmable ROM (EEPROM), or a memory card. The computer program recorded in the memory is installed on the computer, and the CPU executes this program. Alternatively, the CPU reads this program from the memory, and executes the computer programy thereby to execute the processing at steps explained above.

The computer program may be downloaded from an external device that is connected to a network and that has a recording medium storing the computer program, or from an external device that has the computer program recorded on the memory.

As explained above, according to one aspect of the present invention, the drawing processing method and the image formation apparatus can omit the drawing processing that does not change the status of the drawing destination memory, When the drawing processing is omitted, the processing including the read processing and the write processing that occupy a major part of the drawing processing time can be omitted. Therefore, there is a large effect of reducing the processing time and increasing the drawing speed.

According to another aspect of the present invention, the information processing apparatus can reduce the quantity of data transfer to the image formation apparatus. Therefore, the drawing speed can be further improved,

According to still another aspect of the present invention, the computer program can make the computer function as the drawing processing device.

The present document incorporates by reference the entire contents of Japanese priority document, 2002-267967 filed in Japan on September 13, 2002.

Although the invention has been described with respect to a specific embodiment for a complete and clear disclosure the appended claims are not to be thus limited but are to be construed as embodying all modifications and alternative constructions that may occur to one skilled in the art which fairly fall within the basic teaching herein set forth.

## Claims

1. An information processing apparatus comprising:
a drawing omission determination unit (41) that determines whether drawing process corresponding to a graphical drawing instruction, out of a plurality of graphical drawing instructions, can be omitted based on a drawing attribute of a pattern corresponding to the graphical drawing instruction;
a selection unit (42) that makes the graphical drawing instructions invalid if the drawing omission determination unit (41) determines that the drawing process can be omitted, and makes other graphical drawing instructions valid; and
an output unit (52) that outputs to an information processing apparatus the other graphical drawing instructions to get an image corresponding to the other graphical drawing instructions printed.

2. An image formation apparatus comprising:
a page memory (14);
a drawing omission determination unit (41) that determines whether drawing process corresponding to a graphical drawing instruction, out of a plurality of graphical drawing instructions, can be omitted based on a drawing attribute of a pattern corresponding to the graphical drawing instruction;
a selection unit (42) that makes the graphical drawing instruction invalid if the drawing omission determination unit (41) determines that the drawing process can be omitted, and makes other graphical drawing instructions valid;
a drawing unit (13) that performs the drawing process to draws an image onto the page memory (14) based on the other graphical drawing instructions; and
an image formation unit (1) that forms an image onto a recording medium paper based on the image on the page memory (14).

3. The information processing apparatus according to claim 1 wherein
the graphical drawing instruction is described in a page description language that includes a basic graphical drawing instruction which specifies a pattern to be drawn, and a drawing attribute instruction which specifies the drawing attribute.

4. The information processing apparatus according to any one of the preceding claims, wherein
the drawing attribute includes information about a color of a pattern concerning the graphical drawing instruction and a method for performing the drawing process.

5. The information processing apparatus according to any one of the preceding claims, wherein
the drawing omission determination unit (41) determines that the drawing process can be omitted when the drawing attribute of a pattern concerning the graphical drawing instruction does not change the contents of a memory at a drawing destination before and after the drawing process regardless of the contents of the memory.

6. The information processing apparatus according to any one of the preceding claims, wherein
the drawing omission determination unit (41) determines that the drawing process can be omitted when it is determined from the drawing attribute of a pattern concerning the graphical drawing instruction and a method for performing the drawing process that the contents of a memory at a drawing destination are not changed before and after the drawing process regardless of the contents of the memory.

7. The information processing apparatus according to any one of the preceding claims, wherein
the drawing omission determination unit (41) determines that the drawing process can be omitted when the color density is the lowest and also when the method is a logical sum (OR) among the drawing attributes of a pattern concerning the graphical drawing instruction.

8. The information processing apparatus according to any one of the preceding claims, wherein
the drawing omission determination unit (41) determines that the drawing process can be omitted when a memory (14) at a drawing destination is in an initialized state.

9. The information processing apparatus according to any one of claims 1 or 3 to 8, further comprising an output status flag (43) that indicates whether the selection unit (42) has already set a certain graphical drawing instruction valid, wherein
the drawing omission determination unit (41) determines whether the drawing process can be omitted based on the state of the output status flag (43).

10. The information processing apparatus according to claim 9, wherein
the drawing omission determination unit (41) determines that the drawing process can be omitted when the output status flag (43) indicates that the graphical drawing instruction is not yet set valid, and also when the drawing attribute of a pattern concerning the graphical drawing instruction does not change the contents of a memory at a drawing destination before and after the drawing process when the memory is in an initialized state even when the drawing process is carried out.

11. The information processing apparatus according to claim 9 or claim 10, wherein
the drawing omission determination unit (41) determines that the drawing process can be omitted when the output status flag (43) indicates that the graphical drawing instruction is not yet set valid, when the color density is the lowest and also when a method for performing the drawing process is a replacement (SET) among the drawing attributes of a pattern concerning the graphical drawing instruction.

12. The information processing apparatus according to claim 9, claim 10 or claim 11, wherein
the drawing omission determination unit (41) determines that the drawing process can be omitted when the output status flag (43) indicates that the graphical drawing instruction is not yet set valid, when the color density is the lowest and also when a method for performing the drawing process is a logical sum (OR) among the drawing attributes of a pattern concerning the graphical drawing instruction.

13. The information processing apparatus according to any one of claims 9 to 12, wherein
the drawing omission determination unit (41) determines that the drawing process can be omitted when the output status flag (43) indicates that the graphical drawing instruction is not yet set valid, when the color density is the lowest and also when a method for performing the drawing process is an exclusive logical sum (XOR) among the drawing attributes of a pattern concerning the graphical drawing instruction.

14. The information processing apparatus according to any one of claims 9 to 13, wherein
the drawing omission determination unit (41) determines that the drawing process can be omitted when the output status flag (43) indicates that the graphical drawing instruction is not yet set valid, when a method of the drawing process is a logical product (AND) among the drawing attributes of a pattern concerning the graphical drawing instruction.

15. The information processing apparatus according to any one of claims 9 to 14, wherein
the output status flag (43) indicates whether the selection unit (42) has already set a certain graphical drawing instruction valid for each graphical drawing instruction concerning an image for one page.

16. The information processing apparatus according to any one of claims 9 to 15, further comprising a dividing unit that divides one page into a specific number of determination regions, and the output status flag (43) is provided for each determination region, and
the drawing omission determination unit (41) determines whether the drawing can be omitted based on the status of the output status flag (43) for each determination region to which a drawing region concerning the graphical drawing instruction belongs.

17. The information processing apparatus according to claim 16, wherein the dividing unit divides the one page into the determination regions based on bands.

18. The information processing apparatus according to any one of claim 1 or 3 to 17, wherein
when the graphical drawing instruction concerns a pattern of a color, the drawing omission determination unit (41) determines whether the drawing process can be omitted for each color plane of the color.

19. The information processing apparatus according to any one of claims 1 or 3 to 18, wherein
the drawing omission determination unit (41) determines whether the drawing process can be omitted only when a pattern concerning the graphical drawing instruction is a graphic pattern.

20. The information processing apparatus according to any one of claims 1 or 3 to 19, wherein
when a pattern concerning the graphical drawing instruction is an image pattern, the drawing omission determination unit (41) detects continuous pixels of the same color within the image pattern, and determines whether the drawing process can be omitted for each portion of continuous pixels.

21. The information processing apparatus according to any one of claims 1 or 3 to 20, wherein
when a pattern concerning the graphical drawing instruction is an image pattern, the drawing omission determination unit (41) determines whether the drawing process can be omitted of the image pattern in a word length unit.

22. The information processing apparatus according to any one of claims 1 or 3 to 21, wherein
the output unit (52) outputs the other graphical drawing instructions to the image formation apparatus one-by-one.

23. The information processing apparatus according to any one of claims 1 or 3 to 21, further comprising a drawing data memory that stores the other graphical drawings instructions, wherein
the output unit (52) outputs the other graphical drawing instructions stored in the drawing data memory to the image formation apparatus altogether.

24. The image formation apparatus according to any one of claims 2 to 8 comprising an out put status flag (43) for each graphical drawing instruction, wherein the selection unit (42) sets an output status flag (43) corresponding a certain graphical drawing instruction to set that graphical drawing instruction valid, wherein
the drawing omission determination unit (41) determines whether the drawing process can be omitted based on the state of the output status flag (43).

25. The image formation apparatus according to claim 24, wherein the drawing omission determination unit (41) determines that the drawing process can be omitted when the output status flag (43) is not set and when the drawing attribute of a pattern concerning the graphical drawing instruction does not change the contents of a memory at a drawing destination before and after the drawing process when the memory is in an initialized state even when the drawing process is carried out.

26. The image formation apparatus according to either claim 24 or claim 25, wherein
the drawing omission determination unit (41) determines that the drawing process can be omitted when the output status flag (43) is not set, when the color density is the lowest, and when a method for performing the drawing process is a replacement (SET) among the drawing attributes of a pattern concerning the graphical drawing instruction.

27. The image formation apparatus according to any one of claims 24 to 26, wherein
the drawing omission determination unit (41) determines that the drawing process can be omitted when the output status flag (43) is not set, when the color density is the lowest and also when a method for performing the drawing process is a logical sum (OR) among the drawing attributes of a pattern concerning the graphical drawing instruction.

28. The image formation apparatus according to any one of claims 24 to 27, wherein
the drawing omission determination unit (41) determines that the drawing process can be omitted when the output status flag (43) is not set, when the color density is the lowest, and when a method for performing the drawing process is an exclusive logical sum (XOR) among the drawing attributes of a pattern concerning the graphical drawing instruction.

29. The image formation apparatus according to any one of claims 24 to 28, wherein
the drawing omission determination unit (41) determines that the drawing process can be omitted when the output status flag (43) is not set and when the modification method is a logical product (AND) among the drawing attributes of a pattern concerning the graphical drawing instruction.

30. The image formation apparatus according to any one of claims 24 to 29, wherein
the output status flag (43) indicates whether a certain graphical drawing instruction has been made valid for each graphical drawing instruction concerning an image for one page.

31. The image formation apparatus according to any one of claims 24 to 30, further comprising a dividing unit that divides one page into a specific number of determination regions, and the output status flag (43) is provided for each determination region, and
the drawing omission determination unit (41) determines whether the drawing can be omitted based on the status of the output status flag (43) for each determination region to which a drawing region concerning the graphical drawing instruction belongs.

32. The image formation apparatus according to claim 31, wherein the dividing unit divides the one page into the determination regions based on bands.

33. The image formation apparatus according to any one of claims 2 to 8 or 24 to 32, wherein
the graphical drawing instruction concerns a pattern of color, and the drawing omission determination unit (41) determines whether the drawing process can be omitted for each color plane of the color.

34. The image formation apparatus according to any one of claims 2 to 8 or 24 to 33, wherein
the drawing omission determination unit (41) determines whether the drawing process can be omitted when the graphical drawing instruction corresponds to a graphic pattern.

35. The image formation apparatus according to any one of claims 2 to 8 or 24 to 34, wherein
when a pattern concerning the graphical drawing instruction is an image pattern, the drawing omission determination unit (41) detects continuous pixels of the same color within the image pattern, and determines whether the drawing process can be omitted for each portion of continuous pixels.

36. The image formation apparatus according to any one of claims 2 to 8 or 24 to 35, wherein
when a pattern concerning the graphical drawing instruction is an image pattern, the drawing omission determination unit (41) determines whether the drawing process can be omitted of the image pattern in a word length unit.

37. The image formation apparatus according to any one of claims 2 to 8 or 24 to 36, wherein
the output unit (52) outputs the other graphical drawing instructions to the image formation apparatus one-by-one.

38. The image formation apparatus according to any one of claims 2 to 8 or 24 to 36, further comprising a drawing data memory that stores the other graphical drawing instructions, wherein
the output unit (52) outputs the other graphical drawing instructions stored in the drawing data memory to the image formation apparatus altogether.

39. The image formation apparatus according to any one of claims 3 to 8 or 24 to 38, further comprising:
a receiving unit that receives the drawing instructions from an external source; and
an interpreter (11) that converts the drawing instructions into the graphical drawing instructions of a format which is suitable for the drawing process.

40. A drawing processing method comprising:
determining whether drawing processing corresponding to a plurality of graphical drawing instructions can be omitted based on a drawing attribute of a pattern corresponding to the graphical drawing instruction; and
making the graphical drawing instruction invalid if it is determined at the determining that the drawing process can be omitted, and making other graphical drawing instructions valid.

41. The drawing processing method according to claim 40, wherein
the determining includes determining that the drawing process can be omitted when the drawing attribute of a pattern concerning the graphical drawing instruction does not change the contents of a memory at a drawing destination before and after the drawing process regardless of the contents memory.

42. The drawing processing method according to either claim 40 or claim 41, wherein
the determining includes determining that the drawing process can be omitted when it is determined from the drawing attribute of a pattern concerning the graphical drawing instruction and a method for performing the drawing process that the contents of a memory at a drawing destination are not changed before and after the drawing process regardless of the contents of the memory.

43. The drawing processing method according to any one of claims 40 to 42, wherein
the determining includes determining that the drawing process can be omitted when a memory at a drawing destination is in an initialized state.

44. The drawing processing method according to any one of claims 40 to 43, wherein
the determining includes determining whether the drawing process can be omitted based on a state of an output status flag that is set when a certain graphical drawing instruction is made valid.

45. The drawing processing method according to claim 44, wherein
the determining includes determining that the drawing process can be omitted when the output status flag is not set and when the drawing attribute of a pattern concerning the graphical drawing instruction does not change the contents of a memory at a drawing destination before and after the drawing process when the memory is in an initialized state even when the drawing process is carried out.

46. The drawing processing method according to either claim 44 or claim 45, wherein
the output status flag indicates whether a certain graphical drawing instruction has been made valid for each graphical drawing instruction concerning an image for one page.

47. The drawing processing method according to any one of claims 44 to 46, further comprising dividing one page into a desired number of determination regions, wherein the output status flag is provided in each determination region, and
the determining includes determining whether the drawing can be omitted based on the status of the output status flag for each determination region to which a drawing region concerning the graphical drawing instruction belongs.

48. The drawing processing method according to claim 47, wherein the dividing includes dividing the one page into the determination regions based on bands.

49. The drawing processing method according to any one of claims 40 to 48, wherein
the graphical drawing instruction concerns a pattern of a color, and the determining includes determining whether the drawing process can be omitted for each color plane of the color.

50. The drawing processing method according to any one of claims 40 to 49, wherein
the graphical drawing instruction corresponds to an image pattern, and
the determining includes detecting continuous pixels of the same color within the image pattern, and determining whether the drawing process can be omitted for each portion of continuous pixels.

51. The drawing processing method according to any one of claims 40 to 50, wherein
the graphical drawing instruction corresponds to an image pattern, and
the determining includes determining whether the drawing process can be omitted from the image pattern in a word length unit.

52. A computer program comprising program code means that, when executed on a computer system, instructs a computer system to carry out the steps according to any one of claims 40 to 51.

53. A computer readable storage medium having recorded thereon program code means that, when executed on a computer system, instructs a computer system to carry out the steps according to any one of claims 40 to 51.
